# EUROPÄISCHE PATENTSCHRIFT

(11) **EP 1 565 630 B1**
(45) Veröffentlichungstag und Bekanntmachung des Hinweises auf die Patenterteilung: **22.04.2009**
(21) Anmeldenummer: 03780039.8
(22) Anmeldetag: 24.11.2003
(51) Int. Cl.: E04H 15/20, C05F 17/02

(54) **ABDECKVORRICHTUNG**
COVERING DEVICE
DISPOSITIF DE COUVERTURE

(30) Priorität: 27.11.2002 DE 10255509
(43) Veröffentlichungstag der Anmeldung: 24.08.2005
(73) Patentinhaber: W.L. Gore & Associates GmbH, 85640 Putzbrunn (DE)
(72) Erfinder: BAUER, Ambros, 83627 Warngau (DE); BINDING, Markus, 85461 Grünbach (DE)
(74) Vertreter: Weber, Doris
(86) Internationale Anmeldenummer: PCT/EP2003/013186
(87) Internationale Veröffentlichungsnummer: WO 2004/048719

(56) Entgegenhaltungen:
- WO-A-02/00572
- DE-A- 4 231 414
- DE-A- 19 842 887

## Beschreibung

Die Erfindung betrifft eine Konstruktion in einer flexible Vorrichtung zur Abdeckung von geschüttetem oder gestapeltem Material, insbesondere zur aeroben Behandlung von organikhaltigem Abfall wie beispielsweise Restabfall oder Hausmüll in einer Rottemiete.

Auf dem Gebiet der Abfallbehandlung sind verschiedene Vorrichtungen und Verfahren zum Trocknen und zum Abbau biologischer Bestandteile von festen Siedlungsabfallen bekannt. Eine bekannte Vorrichtung stellt ein geschlossenes System dar und beinhaltet das Kompostieren in baulich geschlossenen Gehäusen, Containern oder Boxen. Nachteilig an diesem geschlossenen System sind die hohen Investitionskosten bei der Anschaffung einer solchen Vorrichtung als auch die Kosten, die zur Abführung und Reinigung der innerhalb des Systems entstehenden Abluft anfallen.
Eine andere, einfachere Vorrichtung umfaßt das offene Kompostieren in Rottemieten unter freiem Himmel. Hierbei treten allerdings Probleme mit der Keimemissions- und Geruchskontrolle auf, da alle entstehenden Gase ungehindert in die Atmosphäre entweichen können. Zur Behebung dieser Problematik werden seit einigen Jahren großflächige permeable Abdeckplanen eingesetzt, welche die Rottemieten vollständig bedecken. Die Permeabilität dieser Abdeckungen ist so gewählt, dass die Rottemiete aktiv belüftet werden kann und gleichzeitig ein Schutz gegen Keimemission und Geruch gegeben ist. Beispielsweise beschreibt die DE 4231414 C2 eine Abdeckung für eine Kompostmiete mit einem wasserdichten und gasdurchlässigen Membranlaminat. Solche Abdeckungen weisen aber verschiedene Nachteile auf. Zum einen erfolgt das Aufsetzen und das Abdecken der Rottemieten zeitlich nacheinander, das heißt, die Miete muß erst vollständig aufgesetzt sein, bevor die Abdeckplane darübergezogen werden kann. Solange die offene, nicht abgedeckte Miete frei von Luft überströmt wird, führt dies zu unerwünschten Emissionen. Außerdem muss zum Abtragen der Miete die Abdeckung von der Miete entfernt werden, damit die Geräte zum Abtragen freien Zugang zur Rottemiete haben und keine Schäden an der Abdeckung verursachen. Das Entfernen der Abdeckung führt wiederum zu unerwünschten Emissionen. Zum anderen ergibt sich durch die aufwendige, zumindest teilweise manuelle Handhabung beim Auflegen und Entfernen der Abdeckplane ein erheblicher Personalaufwand. Die Handhabung der Abdeckung wird durch die hohe Schütthöhe der Miete noch erschwert. Weiterhin müssen Randbeschwerungen zum Niederhalten der Abdeckplane, wie zum Beispiel wassergefüllte Feuerwehrschläuche und Sandsäcke entfernt und später wieder plaziert werden. Auch bei der Verwendung mechanischer Wickelungsmaschinen werden vorteilhaft mindestens zwei Personen benötigt. Weiterhin kann es durch das Auf- und Abrollen der Abdeckplane zu Beschädigungen des Planenmaterials kommen, was die Funktionalität der Abdeckplane, insbesondere bei einem Membranmaterial, stark herabsetzt. Auch aus Sicht des Arbeitsschutzes ist das Arbeiten mit Abdeckplanen auf Rottemieten für das zuständige Personal nicht unproblematisch. Einerseits besteht ein Unfallrisiko beim Betreten und Überschreiten der Miete. Zum anderen hat das Personal bei einer nicht abgedeckten Miete unmittelbaren Kontakt mit dem abzudeckenden Material und den austretenden Emissionen, was ein Gesundheitsrisiko für das Personal darstellt.
In einer Weiterentwicklung werden Rotteboxen mit einer Abdeckung versehen. Bei der in der DE 29616788 U1 beschriebenen Klappdachbox ist eine Dachkonstruktion vorgesehen, die mit wasserdichten und luftdurchlässigen Membranlaminaten ausgestattet ist. Jedoch benötigt die Klappdachbox teure Materialien für Mauern und Dachkonstruktion. Außerdem besteht weiterhin das Emissionsproblem während des Befüll- und Entleerungsvorganges, da das Klappdach offen sein muß, um eine ausreichende Durchfahrtshöhe für einen Radladerbetrieb zu ermöglichen.
Unter Emissionen ist zusammenfassend das Austreten von Stäuben, Aerosolen, Gerüchen, Keimen, Pilzsporen, Samen und ähnliches zu verstehen.

Aufgabe der vorliegenden Erfindung ist deshalb eine verbesserte Abdeckung von geschüttetem oder gestapeltem Material mit Abdeckplanen, die eine einfachere und schonendere Handhabung der Abdeckplane vorsieht.
Weiter ist es Aufgabe die Geruchs- und Keimemission während des Aufsetzens und des Abtragens von Mieten aus organikhaltigem Abfall zu verringem.

Es ist weiterhin Aufgabe der vorliegenden Erfindung eine kostengünstige und preiswerte Abdeckung von geschüttetem oder gestapeltem Material bereitzustellen, welche die oben angeführten Nachteile des Standes der Technik überwindet.

Erfindungsgemäß wird die Aufgabe durch die Merkmale des Anspruch 1 sowie durch die Merkmale des Vorrichtungsanspruch 21 und des Verfahrensanspruch 43 gelöst. Die abhängigen Ansprüche geben vorteilhafte Ausgestaltungen der Erfindung an.

Die Aufgabe wird gelöst durch eine Abdeckkonstruktion für geschüttete oder gestapelte Materialien, die Abdeckkonstruktion weist eine Abdeckplane auf, welche gebildet ist aus einer Anzahl von mit mindestens einem Fluid füllbaren und mindestens teilweise miteinander verbundenen Stützelementen sowie mindestens einem wasserdichten und gasdurchlässigen Flächengebilde, wobei das Flächengebilde mit den Stützelementen verbunden ist.
Die Abdeckkonstruktion bildet eine flexibel errichtbare Vorrichtung zur aeroben Behandlung von geschüttetem oder gestapeltem Material in dem die Abdeckkonstruktion das Material abdeckt. Dabei weist die Vorrichtung einen aufgestellten Zustand und einen abgesenkten Zustand auf.
Der aufgestellte Zustand der Vorrichtung wird durch die mit mindestens einem Fluid unter Druck gefüllten Stützelemente verwirklicht. Dadurch wird das Flächengebilde angehoben und bildet einen Abstand zum Material. Im aufgestellten Zustand bildet die Abdeckkonstruktion eine Halle oder einen Raum aus, in dem das abzudeckendes Material geschüttet oder gestapelt werden kann. Das angehobene Flächengebilde bildet insbesondere einen befahrbaren Raum um das Material.
Im abgesenkten Zustand der Vorrichtung enthalten die Stützelemente im wesentlichen kein Fluid, d.h. die Stützelemente sind so von mindestens einem Fluid entleert, dass das Flächengebilde abgesenkt ist und das Material bedeckt. Dann ruht die Abdeckplane wie eine gewöhnliche Mietenabdeckung auf dem abzudeckenden Material.

Die erfindungsgemäße Abdeckkonstruktion ist entweder direkt am Boden mit entsprechenden Vorrichtungen befestigt oder befindet sich als Dachkonstruktion auf oder an entsprechenden Einfassungswänden.
Die Stützelemente werden zum Aufstellen der Abdeckkonstruktion mit mindestens einem Fluid gefüllt. Das die Stützelemente füllende Fluid kann ein Gas, ein Dampf, eine Flüssigkeit oder ein Gas und eine Flüssigkeit sein. Das bedeutet, dass die Stützelemente entweder mit mindestens einem Gas oder mit mindestens einer Flüssigkeit oder mit mindestens einem Gas und mindestens einer Flüssigkeit gefüllt werden können. Die Stützelemente sind mindestens gasdicht ausgestaltet. Das Befüllen erfolgt unter Druck, sodass sich die Stützelemente zu einem dreidimensionalen Gebilde, beispielsweise zu einer Halle erheben. Das an den Stützelementen befestigte mindestens eine wasserdichte und gasdurchlässige Flächengebilde wird mit den Stützelemente ebenfalls angehoben.
Die Größe der Konstruktion wird so gewählt, dass sich ein Raum mit ausreichender Höhe bildet, so dass das Einbringen des abzudeckenden Materials mit Radladern, Eintrags- und Förderbänder oder ähnlichen Transportmaschinen erfolgen kann. Nach dem Aufstellen der Miete wird das mindestens eine Fluid aus den Stützelementen weitestgehend entfernt, so dass die Konstruktion kontrolliert in sich zusammenfällt und die Miete abdeckt. Mit Hilfe von Reffmechanismen kommt das wasserdichte und gasdurchlässige Flächengebilde lagerichtig direkt auf der Oberfläche der Miete zum liegen. Zum Entleeren der Miete wird wiederum die erfindungsgemäße Vorrichtung zumindest zeitweise in den aufgestellten Zustand gebracht.

Mit der erfindungsgemäßen Konstruktion und flexiblen Vorrichtung wird eine kostengünstige, einfache und schonende Handhabung der Abdeckplane verwirklicht. Die Abdeckplane wird durch die Kombination von Stützelementen und wasserdichtem und gasdurchlässigem Flächengebilde gebildet. Das Flächengebilde erfährt über das Füllen und Leeren der Stützelemente einen schonenden Hebe- und Senkvorgang. Dieser Hebe- und Senkvorgang ersetzt die aufwendigen und das Material beanspruchenden Verfahren des kompletten Zusammenziehens oder -rollens und Auseinanderfaltens der Abdeckplane im Stand der Technik. Außerdem können Radlader oder andere Transportmaschinen zum Auf und Abbau der Rottemiete eingesetzt werden, ohne dass die Abdeckplane vollständig entfernt werden muß. Stattdessen wird das Flächengebilde angehoben und der dadurch entstehende Raum ist für materialeinbringende Maschinen wie Radlader befahrbar. Damit kann die erfindungsgemäße Konstruktion an Ort und Stelle verbleiben und muß nicht wie die bekannte Abdeckplane zum Auf- und Abbau der Rottemiete aufwendig verpackt und umgesetzt werden.

Die erfindungsgemäße Vorrichtung vereint die Vorteile eines geschlossenen Systems mit den Vorteilen der bekannten einfachen Mietenabdeckung. Einerseits bleibt auch im aufgestellten Zustand die Vorrichtung weitestgehend geschlossen gegenüber der Umgebung. Das ist darauf zurückzuführen, dass das Flächengebilde der erfindungsgemäßen Vorrichtung sowohl im aufgestellten Zustand um die Rottemiete herum aufgespannt als auch im gesenkten Zustand auf der Rottemiete aufliegt bzw. um die Miete herum gerafft ist, sodass die Miete immer vom Flächengebilde umgeben ist. Damit verbleibt die belastete Luft weitgehend innerhalb der erfindungsgemäßen Vorrichtung. Lediglich im aufgestellten Zustand wird die Vorrichtung zum Auf- oder Abbau des abzudeckenden Materials zeitweise seitlich geöffnet. Während der zeitweisen seitlichen Öffnung erfolgt im Gegensatz zu einer vollständigen Freilegung des Materials im Stand der Technik eine stark verminderte Emission wie eine Geruchs- und Keimemission an die Umgebung. Zusätzlich kann erstmalig an eine Mietenabdeckung eine Absaugung installiert werden, um im aufgestellten Zustand eventuell durch Radladerverkehr verschleppte Emissionen mittels Unterdruck zu erfassen und einer benachbarten Abluftreinigung zuzuführen. Zum anderen erlaubt die Vorrichtung eine stark mechanisierte Einbringung und Ausbringung des abzudeckenden Materials mit minimalem personellen Aufwand, da zumeist nur eine Person mit Radlader benötigt wird oder über automatische Eintragungsbänder der Raum befällt und entleert wird. Damit kommt auch das Personal nicht mehr in unmittelbaren Kontakt mit dem abzudeckenden Material, was eine Verbesserung des Arbeitsschutzes bedeutet.
Andererseits enspricht die erfindungsgemäße Vorrichtung im abgesenkten Zustand einer gewöhnlichen Mietenabdeckung. Das Flächengebilde liegt unmittelbar auf dem abzudeckenden Material und ermöglicht einen Wasserdampfaustrag durch das Flächengebilde zur Umgebung. Außerdem bewirkt das unmittelbare Aufliegen der Konstruktion auf der Rottemiete, dass die gesamte Vorrichtung weniger windanfällig ist.
Gleichzeitig wirkt das Flächengebilde als Schutzbarriere nach Innen und nach Außen. Nach Innen schützt das Flächengebilde gegen den Eintritt von Wasser und gegen Austrocknung bei starker Sonneneinstrahlung. Nach Außen schützt das Flächengebilde gegen den Austritt von Keimemissionen und Gerüchen und bewirkt aufgrund seiner Gasdurchlässigkeit, dass in der Vorrichtung durch aeroben Abbau entstehendes CO₂ durch das Flächengebilde entweichen kann, ohne das es zu einem Druckaufbau am Flächengebilde kommt.

In einer Ausführungsform weist die Abdeckkonstruktion mindestens ein Fluideinlaß zum Befüllen der Stützelemente bei einem derartigen Druck auf, dass das Flächengebilde durch die Stützelemente angehoben werden kann. Die Abdeckkonstruktion weist weiter mindestens ein Fluidauslaß zum Entleeren der Stützelemente auf, dass das Flächengebilde durch die Stützelemente abgesenkt werden kann. Der mindestens eine Fluideinlaß ist eine Öffnung in mindestens einem Stützelement und stellt die Zufuhr von mindestens einem Fluid unter Druck sicher. Dazu ist der Fluideinlaß mit einem Lüfter oder Verdichter verbunden, welcher das mindestens eine Fluid unter Druck über den Fluideinlaß in die Stützelemente drücken. Jedes Stützelement kann einen separaten Fluideinlaß ausweisen. In bevorzugter Weise gibt es einen Fluideinlaß in einem Stützelement und entsprechende Fluidverteiler zwischen den Stützelementen.
Der mindestens eine Fluidauslaß kann ein herkömmliches Ventil sein, welches sich ebenfalls in mindestens einem Stützelement befindet. In einer Ausführungsform weist jedes Stützelement ein eigenes Ventil auf.
In einer weiteren Ausführungsform ist der Fluideinlaß gleichzeitig auch der Fluidauslaß. Das Entleeren der Stützelemente erfolgt dann entweder passiv über den Lüfter oder aktiv durch Saugbetrieb des Lüfters.

Die Abdeckkonstruktion bildet mit dem angehobenen Flächengebilde einen geschlossenen befahrbaren Raum über dem Material aus. Befahrbarer Raum bedeutet dabei, dass der Raum so ausgestaltet ist, dass ihn Personen und/oder Fahrzeuge jeglicher Art betreten bzw. befahren können, um das Material in oder aus dem Raum zu bewegen. Das bedeutet, dass der Raum eine ausreichende Höhe und Breite aufweist. In einer Ausführungsform weist der Raum eine Höhe über den Boden von mindestens 6m auf. Geschlossener Raum bedeutet, dass die Abdeckplane, also Stützelemente und Flächengebilde, durch das Anheben so gespannt ist, dass Wände und/oder ein Dach ausgebildet werden, so dass das Material auch im aufgestellten Zustand vollständig von der Abdeckplane umgeben ist und nicht direkt mit der Umgebung in Kontakt kommt. Außerdem weist die Vorrichtung mindestens eine verschließbare Öffnung auf, durch die das Material in oder aus den Raum tranportiert werden kann. Diese Öffnung wird lediglich zum Befahren des Raumes kurzzeitig geöffnet, ansonsten aber verschlossen gehalten, damit das Rauminnere keinen direkten Kontakt zur Umgebung hat.

Durch den Hebe- und Senkvorgang des Flächengebildes kann ein variabler Abstand zwischen dem abzudeckenden Material und dem Flächengebilde eingestellt werden. Je nach Anforderung kann dieser Abstand so gewählt sein, dass das Flächengebilde dicht auf und um dem Material liegt, um einen optimalen Abbauprozeß der organischen Bestandteile zu ermöglichen. Der Abstand kann auch so gewählt sein, dass ein hoher geschlossener und befahrbarer Raum um das Material gebildet wird, so dass das Material in oder aus dem Raum bewegt werden kann. Der Abstand zwischen gehobenem Flächengebilde und Material kann beispielsweise mindestens 2m betragen.

Vorzugsweise ist das wasserdichte und gasdurchlässige Flächengebilde ein Laminat mit einer porösen Schicht die mit mindestens einer texilen Schicht verbunden ist. Die Verwendung eines Textillaminates ist besonders vorteilhaft, da neben der hohen Wasserdichtheit und gleichzeitigen Gasdurchlässigkeit die poröse Schicht für die gleichzeitige Zurückhaltung von Emission wie beispielsweise Gerüchen und Keimen besonders geeignet ist. Vorzugsweise ist die poröse Schicht eine mikroporöse Membrane.

Das gasdurchlässige Flächengebilde hat einen Wasserdampfdurchgangswiderstand von weniger als 20 m² Pa/W und gewährleistet damit einen hohen Wasserdampfdurchgang durch das Flächengebilde. Der geringe Wasserdampfdurchgangswiderstand ermöglicht die Trocknung nassen Materials bzw. den Abtransport bestehenden Prozeßwassers. Ein zusätzliches Verwässern und Verklumpen des Materials wird wirkungsvoll verhindert. Weiterhin weist das Flächengebilde eine Luftdurchlässigkeit zwischen 3 und 100m³/m²/h bei einer Druckdifferenz von 200Pa auf. Dieser Wasserdampfdurchgang als auch die Luftdurchlässigkeit stellt sicher, dass das abzudeckende Material ausreichend belüftet, d.h. ausreichend mit Sauerstoff versorgt wird und Umsetzungsprodukte ohne Druckaufbau entweichen können. Weiterhin ist das Flächengebilde gegenüber Wasser bei einem Wassereintrittsdruck von größer als 10 kPa dicht. Dies gewährleistet einen Schutz vor Verwässerung durch Niederschlagswasser.

Die Stützelemente sind mindestens teilweise miteinander verbunden. Vorzugsweise sind die Stützelemente so miteinander verbunden, dass sie einen gemeinsamen, durchströmbaren Querschnitt aufweisen. In einer weiteren Ausführungsform sind die Stützelemente durch eine Fluidverteiler miteinander verbunden. Damit ist zum Befüllen der Stützelemente nur ein Aggregat, wie beispielsweise ein Lüfter, erforderlich, das die gesamten Stützelemente der erfindungsgemäßen Konstruktion mit mindestens einem Fluid befüllt. Eine andere Ausführungsform sieht vor, dass die Stützelemente zwar miteinander verbunden sind, doch jedes Stützelement ein eigenes Aggregat zum Befüllen aufweist.

Die Stützelemente sind in einer bevorzugten Ausführungsform Schläuche. In einer Ausführungsform sind die Schläuche mit Gas, vorzugsweise mit Luft aufblasbar, wobei der Lüfter dann lediglich Umgebungsluft den Schläuchen zuführt. Die Verwendung von Luft ist besonders kostengünstig. Um eine ausreichende Stabilität der Vorrichtung im aufgestellten Zustand zu erreichen, muß das mindestens eine Fluid mit einem ausreichenden Druck den Stützelementen zugeführt werden, sodass vorzugsweise ein Innenüberdruck von 200Pa vorliegt. In einer weiteren Ausführungsform beträgt dieser Druck mindestens 10kPa, vorzugsweise 12kPa. Die Schläuche haben einen Durchmesser von größer 80cm, vorzugsweise liegt der Durchmesser bei 100cm. Wenn es die Stabilität der Schläuche zuläßt, kann natürlich auch mit einem kleineren Schlauchdurchmesser bei einem höheren Druck gearbeitet werden.

Die Stützelemente weisen eine Oberseite und eine Unterseite auf, wobei die Unterseite zu dem abzudeckenden Material und die Oberseite zur Umgebung gerichtet ist. Das Flächengebilde ist vorzugsweise an der Unterseite der Stützelemente befestigt. Somit kommt das wasserdichte und gasdurchlässige Flächengebilde unmittelbar auf der Oberfläche des abzudichtenden Material zum Liegen und sorgt für einen hohen Wasserdampf- und Gasdurchlaß. Gleichzeitig können sich die Stützelemente im Falle eines teilweise grobstückigen Schüttgutes in diesem nicht verkrallen.

Im aufgestellten Zustand der erfindungsgemäßen Vorrichtung bildet die Abdeckkonstruktion vorzugsweise einen Dachbereich und einen Wandbereich, wobei das Flächengebilde mindestens im Dachbereich angeordnet ist. Die Verwendung von Flächengebilde im Dachbereich ist in den meisten Fällen ausreichend, da im abgesenkten Zustand überwiegend nur der Dachbereich und das dort vorhandene Flächengebilde auf der Oberfläche des abzudeckenden Materials aufliegt. Im Gegensatz dazu faltet sich im abgesenkten Zustand die Abdeckkonstruktion im Wandbereich im wesentlichen um die Miete herum und kann somit nicht aktiv auf das abzudeckende Material einwirken. Mit dieser Ausführung kann die Menge an Material für das wasserdichte und gasdurchlässige Flächengebilde eingespart werden, was insbesondere bei Verwendung von Membranmaterial einen erheblichen Kostenvorteil bringt. In dem Wandbereich wird anstelle des wasserdichten und gasdurchlässigen Flächengebildes eine lediglich wasserdichte, dafür reißfeste und abrasionsbeständige Schutzschicht an den Stützelementen befestigt. Damit wird ein zusätzlicher Schutz der Vorrichtung gegen eventuelle Beschädigungen durch Maschinen während des Be- und Entladens des abzudeckenden Materials erreicht. Somit kann die Abdeckplane in einer Ausführungsform ein wasserdichtes und gasdurchlässiges Flächengebilde und eine wasserdichte Schutzschicht aufweisen.

Das Flächengebilde ist vorzugsweise lösbar mit den Stützelementen verbunden, damit im Fall einer Beschädigung, Verletzung oder Verschmutzung des Flächengebildes dieses auf einfache Art und Weise ausgetauscht werden kann. Im Fall eines Austausches wird die Vorrichtung in den aufgestellten Zustand gebracht, um einen leichten Zugang zu dem auszutauschenden Flächengebilde zu ermöglichen.

Die erfindungsgemäße Vorrichtung kann zusätzlich mit Abfallbehandlungsvorrichtungen wie Sprüh- und Bewässerungsschläuchen oder einer Abluft- und Absaugvorrichtung ausgestattet werden.

Zusätzlich kann an der Innenseite der Vorrichtung eine Anfahrwand vorgesehen sein, die vorzugsweise durch eine Reihe von aneinandergestellten Betonelementen gebildet ist. Diese Anfahrwand stellt im aufgestellten Zustand einen wirksamen Schutz gegen Beschädigungen der Vorrichtung durch Radlader dar. Außerdem ist die Anfahrwand als Randbegrenzung der Miete eine Orientierungshilfe für den Radladerfahrer.

Die Befestigung des Randmaterials der Vorrichtung am Boden kann durch einfache Mittel wie Erdnägel, Heringe oder in das Randmaterial eingearbeitete Beschwerungselemente oder zu flutende Schläuche im/am Randmaterial erfolgen.
In einer weiteren Ausführungsform ist die Vorrichtung auf oder an Wänden befestigt, die einen Ort zum Errichten einer Miete einfassen. Solche Einfassungswände können eine Höhe von Im - 2m haben. Weitere Befestigungsmittel zum Anbringen der Abdeckkonstruktion an Wänden können beispielsweise abrasionsbeständige und luftddichte Säcke sein, in welche die Enden der Stützelemente eingesteckt sind wobei die Säcke direkt an den Wänden befestigt sind.
Insbesondere erfolgt die Befestigung so luftdicht, so dass die Vorrichtung in ihrem Inneren Drücke bis zu 2000Pa beherbergen kann und trotzdem ausreichend gasdicht gegenüber Leckströmen ist.

Ein erfindungsgemäßes Verfahren zur Handhabung einer Vorrichtung zur aeroben Behandlung von geschüttetem oder gestapeltem Material hat die folgenden Schritte: Bereitstellen einer Abdeckkonstruktion mit einer Abdeckplane, die Abdeckplane weist eine Anzahl von mit mindestens einem Fluid füllbaren und mindestens teilweise miteinander verbundenen Stützelementen und mindestens ein wasserdichtes und gasdurchlässiges Flächengebilde, welches mit den Stützelementen verbunden ist, auf; Aufstellen der Abdeckkonstruktion durch Befüllen der Stützelemente mit mindestens einem Fluid bei einem Druck, dass das Flächengebilde angehoben wird und ein Raum ausbildet wird; Einbringen des Materials in den Raum; Absenken der Konstruktion durch Ablassen des mindestens einen Fluids aus den Stützelementen, wobei das Flächengebilde abgesenkt wird und das Material mit dem Flächengebilde bedeckt wird.
Vor dem Einbringen des Material wird eine Öffnung in den Raum geöffnet, diese Öffnung wird vor dem oder während des Absenkens der Abdeckkkonstruktion wieder verschlossen.

### Definitionen:

### Wassereintrittsdrucktest

Der Wassereintrittsdrucktest ist ein hydrostatischer Widerstandstest der im wesentlichen darauf beruht, dass Wasser gegen eine Seite einer Materialprobe gepresst wird und die andere Seite der Materialprobe auf den Durchtritt von Wasser hin beobachtet wird.
Der Wasserdruck wird gemäß einem Testverfahren gemessen, in dem destilliertes Wasser bei 20±2°C auf einer Materialprobe mit einer Fläche von 100cm² zunehmend unter Druck gestellt wird. Der Wasseraufstiegsdruck beträgt 60±3cmH₂O/min. Der Wasserdruck ist dann der Druck, bei dem Wasser auf der anderen Seite der Probe erscheint. Die genaue Vorgehensweise ist in der ISO Norm Nr.811 aus dem Jahre 1981 geregelt. Unter "wasserdicht" ist zu verstehen, dass ein Material einen Wassereintrittsdruck von mindestens 10kPa aushält.

Unter "porös" ist ein Material zu verstehen, welches sehr kleine, mikroskopische Poren durch die innere Struktur des Materials aufweist und die Poren eine miteinander verbundene kontinuierliche Verbindung oder Pfad von einer Oberfläche zur anderen Oberfläche des Materials bilden. Entsprechend den Abmessungen der Poren ist das Material somit durchlässig für Luft und Wasserdampf, flüssiges Wasser kann jedoch nicht durch die Poren gelangen.
Die Messung der Porengröße kann mit einem Coulter Porometer" erfolgen, hergestellt bei Coulter Electronics, Inc., Hialeah, Florida. Das Coulter Porometer ist ein Instrument das eine automatische Messung der Porengrößenverteilung in porösen Medien nach der im ASTM Standard E1298-89 beschriebene Methode ermittelt.
Doch nicht von allen verfügbare porösen Materialien kann die Porengröße mit dem Coulter Porometer ermittelt werden. In einem solchen Fall kann die Porengrößen auch unter Verwendung eines Mikroskopes wie beispielsweise ein Licht- oder Elektronenmikroskopes, ermittelt werden.
Bei Verwendung einer mikroporösen Membrane hat diese eine durchschnittliche Porengröße zwischen 0,1 und 100µm, vorzugsweise liegt die durchschnittliche Porengröße zwischen 0,2 und 10µm.

### Wasserdampfdurchgangswiderstand Ret

Der Ret-Wert ist eine spezifische Materialeigenschaft von Flächengebilden oder zusammengesetzten Materialien, welche den latenten Wärmeverdampfungsfluß bei einem gleichbleibenden Partialdruckgradienten durch eine vorgegebene Oberfläche bestimmt.
Unter "wasserdampfdurchlässig" wird ein Material definiert, das einen Wasserdampfdurchgangswiderstand Ret von unter 150(m²xPa)/W aufweist. Vorzugsweise weist das Flächengebilde einen Ret von unter 20 (m²xPa)/W auf. Die Wasserdampfdurchlässigkeit wird durch das Hohenstein MDM Dry Verfahren gemessen, welches in der Standard-Prüfvorschrift Nr. BPI 1.4 (1987) des Bekleidungsphysiologischen Instituts e.V. Hohenstein beschrieben wird.

### Luftdurchlässigkeit

Die Luftdurchlässigkeit wird in m³/h pro m² Flächengebilde angegeben und wird unter Verwendung eines Luftdurchlässigkeitsprüfgerät von Textest Instruments (FX 3300), Zürich ermittelt. Die Luftdurchlässigkeit wird in Anlehnung an ISO 9237 (1995) ermittelt.
Als "lundurchlässig" wird ein Material bezeichnet, das eine Luftdurchlässigkeit zwischen 3 und 100 M³/m²/h bei einer angelegten Druckdifferenz von 200Pa aufweist.

Der Begriff "flexibel" wird in der vorliegenden Erfindung zur Charakterisierung der Vorrichtung als faltbares, aufrichtbares und zusammenlegbares dreidimensionales Gebilde verwendet.

### Die Erfindung soll nun anhand von Zeichnungen näher erläutert werden:

Figur 1 zeigt eine schematische Darstellung der erfindungsgemäßen Vorrichtung im aufgestellten Zustand.
Figur 1a zeigt eine schematische Darstellung eines ersten Öffnungsmechanismus in einer Stirnwand der erfindungsgemäßen Vorrichtung.
Figur 1b zeigt eine schematische Darstellung eines zweiten Öffnungsmechanismus in einer Stirnwand der erfindungsgemäßen Vorrichtung.
Figur 1c zeigt einen vergrößerten Ausschnitt aus Fig.1 mit einer bevorzugten Befestigungsvorrichtung der erfindungsgemäßen Vorrichtung am Erdboden.
Figur 2 zeigt einen Ausschnitt einer Seitenansicht der erfindungsgemäßen Vorrichtung im abgesenkten Zustand.
Figur 3 zeigt einen Querschnitt durch die erfindungsgemäße Vorrichtung im abgesenkten Zustand.
Figur 4 zeigt einen Querschnitt durch eine Ausführungsform des Flächengebildes
Figur 5 zeigt eine weitere Ausführungsform der erfindungsgemäßen Vorrichtung im aufgestellten Zustand.

Die vorliegenden Erfindung betrifft eine verbesserte Abdeckkonstruktion für geschüttetes oder gestapeltes Material sowie eine flexible Vorrichtung zur aeroben Behandlung von geschüttetem oder gestapeltem Material mit einem entsprechenden Verfahren zur Verwendung der Abdeckkonstruktion. Der Begriff geschüttetes oder gestapeltes Material umfaßt alle Materialien, die geschüttet oder gestapelt werden können, wie beispielsweise Erde, Getreide, organikhaltigen Abfall wie Hausmüll, Kompost, Heu, landwirtschaftliche Produkte, Holz, Steine, Balken oder quaderförmig verpackte Güter. Die Erfindung ist im besonderen auf die aerobe Behandlung von organikhaltigen, festen Siedlungsabfällen gerichtet, kann jedoch auf jedes andere geschüttete oder gestapelte Material angewandt werden, insofern für dieses Material die Zufuhr und der Abtransport von Gasen und im Fall der aeroben Abfallbehandlung insbesondere die Zufuhr von Sauerstoff und der Abtransport von CO₂ notwendig ist. Die erfindungsgemäße Konstruktion und flexible Vorrichtung ist insbesondere auch zur Trocknung von Material verwendbar.
Die folgenden Erläuterungen zu den Figuren beschreiben die Erfindung am Beispiel der Behandlung von Kompost, Restabfall und Hausmüll, wobei diese Materialien im folgenden allgemein unter den Begriffen abzudeckendes Material oder Rottemiete zusammengefaßt sind.

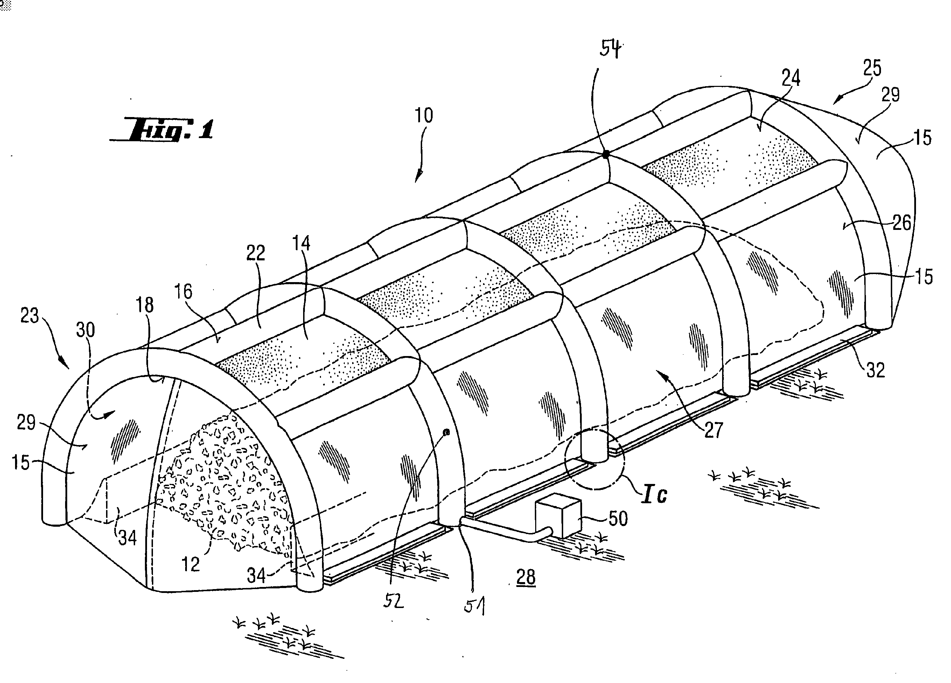

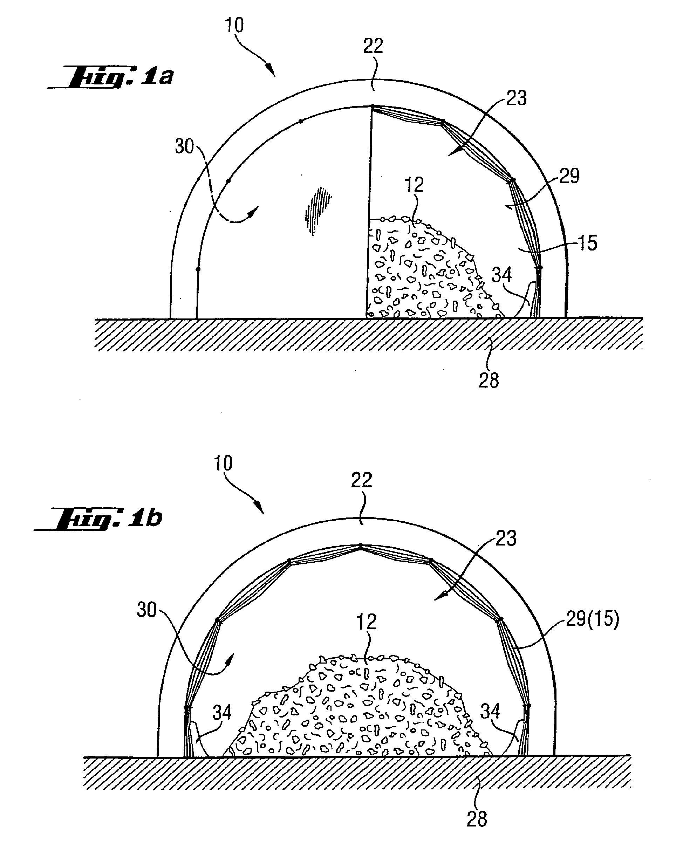

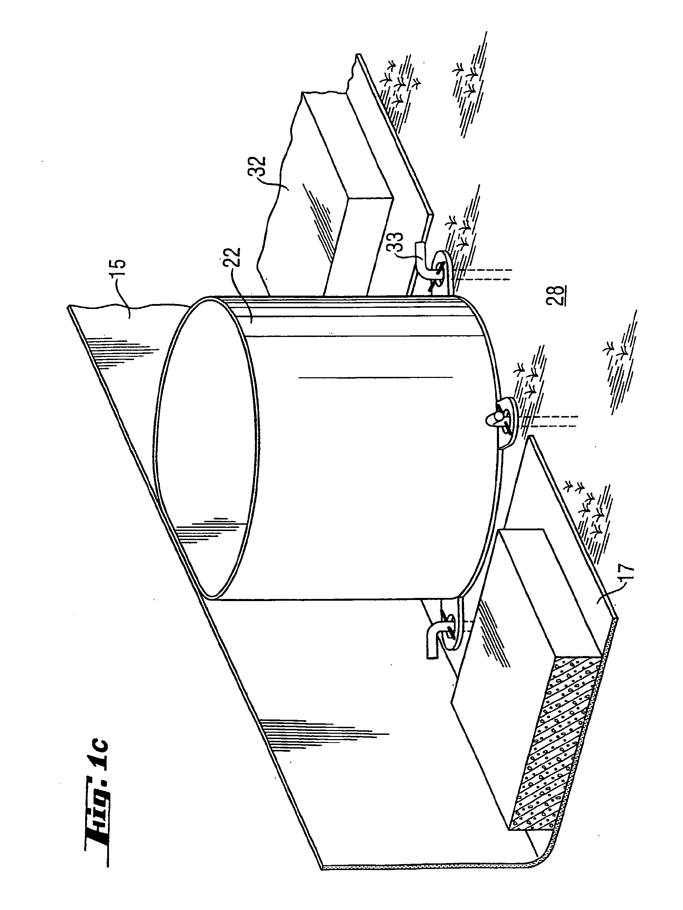

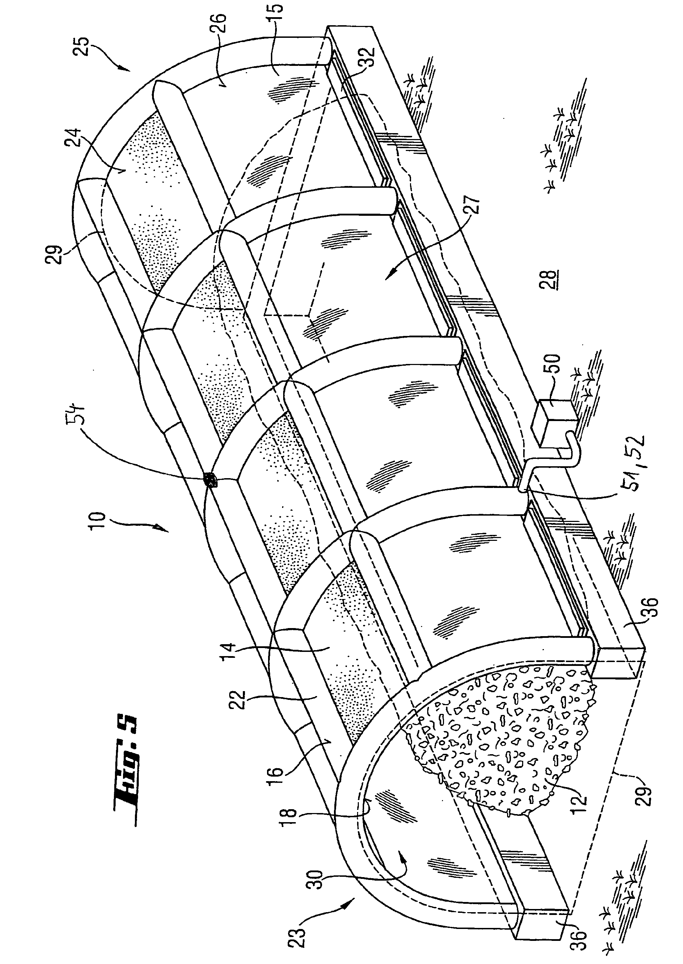

Figur 1 zeigt eine schematische Darstellung der erfindungsgemäßen flexiblen Vorrichtung. Die Vorrichtung setzt sich im wesentlichen aus einer Abdeckkonstruktion (10) mit einer Abdeckplane zusammen. Die Abdeckplane weist eine Anzahl von mit mindestens einem Fluid füllbaren und mindestens teilweise miteinander verbundenen Stützelementen (22) und mindestens ein mit den Stützelementen (22) verbundenes wasserdichtes und gasdurchlässiges Flächengebilde (14) auf. Die Abdeckkonstruktion (10) ist am Erdboden (28) im wesentlichen luftdicht befestigt, indem die Randbereiche der Konstruktion (10) direkt am Erdboden (28) mit entsprechenden Befestigungsvorrichtungen (32) angebracht oder auf Einfassungwänden (36) (siehe Fig. 5 ) befestigt sind.

Die erfindungsgemäße flexible Vorrichtung kann zwei Zustände einnehmen.
Der erste Zustand ist in Figur 1 dargestellt und zeigt die Konstruktion (10) in einem aufgestellten Zustand. Im aufgestellten Zustand sind die Stützelemente (22) mit mindestens einem Fluid unter Druck gefüllt und bilden ein dreidimensionales Gebilde, dass sich hallenförmig über den Erdboden (28) erhebt. Das mit den Stützelementen (22) verbundene Flächengebilde (14) erhebt sich mit den gefüllten Stützelemente (22) ebenfalls über den Boden (28). Dieses Zusammenwirken der gefüllten Stützelemente (22) mit dem Flächengebilde (14) bewirkt, dass die Vorrichtung einen geschlossenen und befahrbaren Raum (30) bildet, in dem sich das abzudeckende Material vorzugsweise in Form einer Rottemieten (12) befindet. In einer Ausführungsform ist ein Lüfter (50) außerhalb der Vorrichtung an einem Stützelement angeschlossen und versorgt die Stützelemente (22) mit mindestens einem Gas.

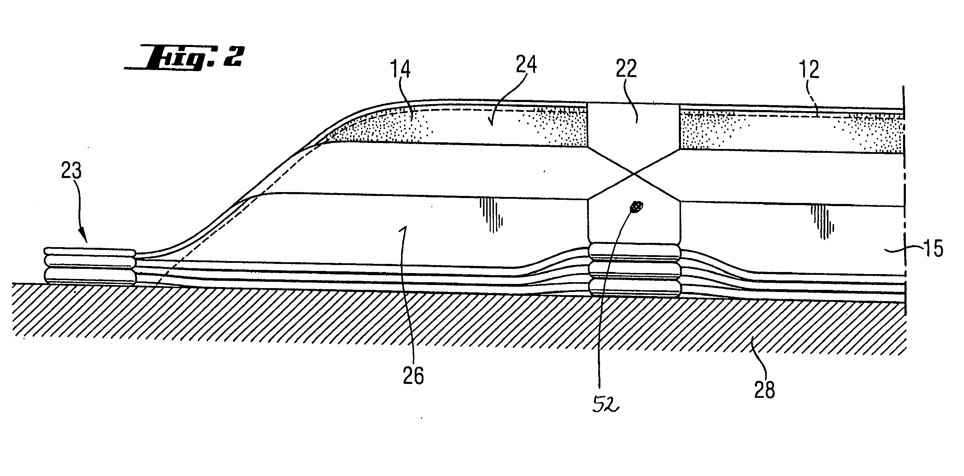

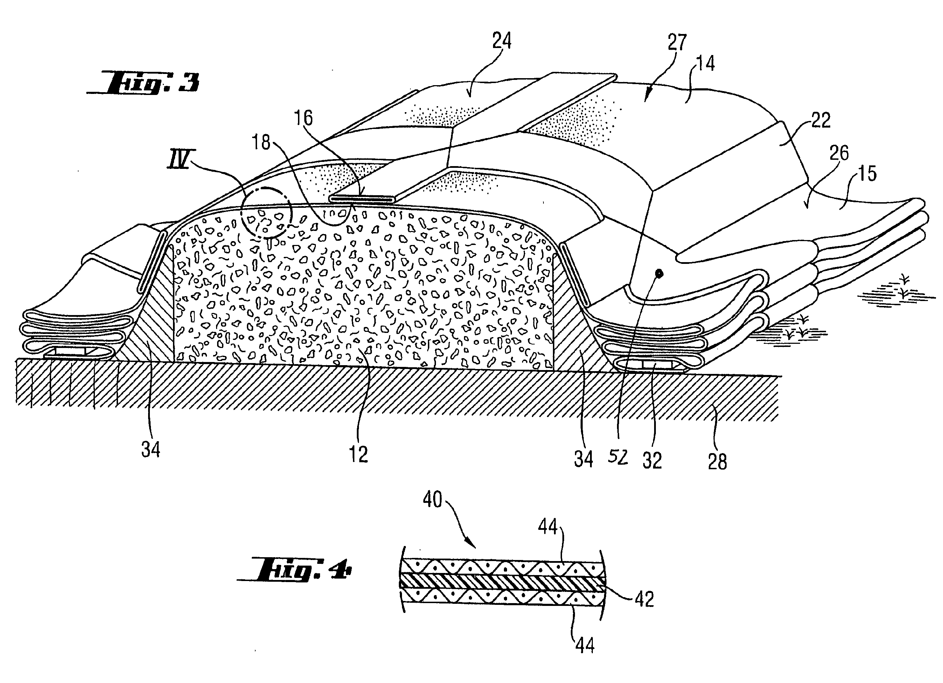

In dem zweiten Zustand befindet sich die Konstruktion (10) in einem abgesenkten Zustand, wie in den Figuren 2 und 3 dargestellt. Im abgesenkten Zustand sind die Stützelementen (22) im wesentlichen leer, d.h. im wesentlichen nicht mit mindestens einem Fluid gefüllt. Die Konstruktion (10) fällt im abgesenkten Zustand in sich zusammen und das wasserdichte und gasdurchlässige Flächengebilde (14) kommt auf der Oberfläche der Rottemiete (12) zum Liegen.
Mit Hilfe von Reffmechanismen kommt das wasserdichte und gasdurchlässige Flächengebilde (14) lagerichtig direkt auf der Oberfläche der Miete zum liegen. Zusätzliche Gurte können die Abdeckkonstruktion gegen Windböen schützen. In bestimmten Situationen kann eine geringer variabler Abstand zwischen dem Flächengebilde und der Oberfläche der Miete eingestellt werden, beispielsweise um ein Anfrieren des Flächengebildes zu verhindern oder um einen höheren Widerstand bezüglich der Wasserdampfdurchlässigkeit des Flächengebildes zu erreichen.

Mit einer solchen Konstruktion ist die Vorrichtung in der Lage, das Flächengebilde (14) zu Heben oder zu Senken, je nachdem, ob die Stützelemente (22) mit mindestens einem Fuid gefüllt oder nicht gefüllt sind.

Das die Stützelemente (22) füllende Fluid kann ein Gas, ein Dampf, eine Flüssigkeit oder ein Gas und eine Flüssigkeit sein. Das bedeutet, dass die Stützelemente (22) entweder mit mindestens einem Gas oder mit mindestens einer Flüssigkeit oder mit mindestens einem Gas und mindestens einer Flüssigkeit gefüllt werden können. Die Stützelemente (22) sind mindestens gasdicht ausgestaltet.
In der Ausführung in Figur 1 bildet die Vorrichtung einen halbrundförmigen Tunnel mit einem Vorderbereich (23) und einem Endbereich (25). Je nach Ausgestaltung der Stützelemente (22) und des Flächengebildes (14) kann die Vorrichtung im aufgestellten Zustand jede beliebige Form annehmen wie beispielsweise quaderförmige, kuppel-, kegel-, oder pyramidenförmige Ausgestaltungen.

In einer Ausführungsform nach Figur 1 bildet die Konstruktion (10) einen Dachbereich (24) und mindestens einen Wandbereich (26) aus. Unter Dachbereich (24) ist der Teil der Konstruktion (10) zu verstehen, der im abgesenkten Zustand unmittelbar auf der Oberfläche der Rottemiete (12) aufliegt. Unter Wandbereich (26) ist der Bereich der Konstruktion (10) zu verstehen, der eine seitliche Begrenzung der Vorrichtung bildet. Im abgesenkten Zustand verläuft der Wandbereich (26) gefaltet um die Rottemiete (12) herum und verschließt diese vollständig. Im aufgestellten Zustand bildet der Wandbereich (26) zwei gegenüberliegende Tunnelwände (27) und zwei gegenüberliegende Stirnwände (29).

Um in das Innere der erfindungsgemäßen Vorrichtung zu gelangen ist vorgesehen, dass sich mindestens eine Stirnwand (29) öffnen läßt. Diese Öffnung muß mindestens so groß sein, dass ein Radlader ins Innere fahren kann. Vorzugsweise weist der Raum (30) mindestens eine verschließbare Öffnung auf. Diese Öffnung wird erst dann geöffnet, wenn tatsächlich Bedarf besteht, den Raum (30) zu betreten. In der Zwischenzeit ist die Vorrichtung auch im aufgestellten Zustand rundherum vollständig verschlossen. Vorteilhafte Öffnungsmechanismen sind in den Figuren 1a und 1b dargestellt. In Figur 1a wird die Stirnwand (29) im Vorderbereich (23) von zwei lösbar miteinander verbundenen Flächengebildsteilen verschlossen. Die Flächengebildsteile sind an einem Stützelement (22) luftdicht befestigt. Eine Öffnung wird gebildet indem die Flächengebildsteile beispielsweise über einen Reißverschluss oder Klettverschluß geöffnet werden und jedes Teil wie ein Vorhang seitlich an dem Stützelement (22) zusammengerafft und befestigt wird. In Figur 1b ist die Stirnwand (29) aus einem Flächengebildsteil gebildet und wird mit Hilfe eines Reffmechanismus entlang des inneren Umfangs des Stützelementes (22) hochgezogen und zusammengerafft. Das Reffen kann manuell oder automatisch erfolgen. In einer Ausführungsform erfolgt ein automatisches Reffen der Stirnwand durch den Aufstellvorgang der Abdeckkonstruktion. Im aufgestellten Zustand ist die Öffnung auch automatisch wieder verschließbar.

Vorzugsweise sind die Stirnwände (29) aus einem wasserdichten textilen Material (15). Es kann natürlich auch vorgesehen sein, dass die Stirnseiten (29) im Vorderbereich (23) und im Endbereich (25) mit einem Öffnungsmechanismus versehen sind.

Vorzugsweise ist mindestens im Dachbereich (24) das wasserdichte und gasdurchlässige Flächengebilde (14) angeordnet, da dieser Bereich im abgesenkten Zustand auf der Oberfläche der Rottemiete (12) aufliegt und den Gasaustausch mit der Umgebung zu bewerkstelligen hat. In diesem Fall ist der Wandbereich (26) aus einer wasserdichten und faltbaren Schutzschicht (15) gebildet. Diese Schutzsschicht (15) weist ein robustes und abrasionsfähiges Material auf und schützt die Vorrichtung im aufgestellten Zustand vor Verschmutzung und Beschädigung durch Maschinen und Anlagen.

Vorzugsweise ist der Raum (30) so gestaltet, dass Be- und Entlademaschinen für das abzudeckende Material (12), wie beispielsweise Radlader, den Raum befahren können. Um zu verhindern, dass die Radlader im Wandbereich (26) das Flächengebilde (14), insbesondere die Schutzschicht (15) beschädigen, sind entlang der Innenseite der Tunnelwände (27) zusätzlich Anfahrwände als seitliche Begrenzung vorgesehen. Diese Anfahrwände sind vorzugsweise aus mehreren aneinandergereihten Elementen, z.B. Betonelementen (34) gebildet. Gleichzeitig dienen die Anfahrwände als Orientierungshilfe für den Radladerfahrer.

In einer weiteren Ausführungsform enthält das Flächengebilde (14) im Dachbereich (24) ein lichtdurchlässiges Material wie beispielsweise durchsichtige Folien, lichtdurchlässiges permeables Laminat oder ein PVC-Fenster. Dieses lichtdurchlässige Material nimmt maximal 5% der Fläche des Dachbereiches (24) ein, damit die gasdurchlässige Funktion des gesamten Flächengebildes (14) nicht wesentlich beeinträchtigt wird.

Die erfindungsgemäße Vorrichtung kann beliebig viele Stützelemente (22) aufweisen. Mindestens sind jedoch zwei Stützelemente (22) erforderlich, um eine ausreichende Befestigung des Flächengebilde (14) zu ermöglichen und um der gesamten Vorrichtung die notwendige Stabilität zu geben. In Figur 1 liegen vorzugsweise vertikal und horizontal angeordnete Stützelemente (22) vor, die kreuzweise zueinander angeordnet sind. Die Stützelemente können auch schräg in einem bestimmten Winkel zum Erdboden verlaufen.

Die Stützelemente (22) weisen mindestens ein Fluideinlaß (51) und mindesten ein Fluidauslaß (52) auf In einer Ausführungsform ist der Fluideinlaß (51) gleichzeitig auch der Fluidauslaß (52). Jedes Stützelement kann einen eigenen Fluideinlaß (51) und Fluidauslaß (52) aufweisen oder, wenn die Stützelemente so miteinander verbunden sind, dass das Fluid durch alle Stützelemente fließen kann, reicht ein Fluideinlaß (51) und ein Fluidauslaß (52) für alle Stützelemente aus. Der Fluideinlaß (51) ist eine Öffnung in einem Stützelement, in welche ein Anschlußstück zum Lüfter (50) ein- oder angeschweißt ist. Das Anschlußstück kann beispielsweise ein PVC-Rohr sein. Der Fluidauslaß (52) ist ein handelsübliches Ventil beispielsweise der Firma Scoprega S.p.A., Mailand, Italien.

Die Stützelemente (22) sind mindestens teilweise miteinander verbunden, das umfaßt alle Ausfübrungsförmen, in den die Stützelemente (22) unmittelbar miteinander an ihren Kontaktpunkten verbunden sind, die Stützelemente (22) nur an einzelnen Kontaktpunkten miteinander verbunden sind, nur einzelne Stützelemente miteinander verbunden sind oder die Stützelemente (22) mittelbar über Hilfsmittel wie beispielsweise Verbindungsleisten, -schienen oder -schnüren miteinander verbunden sind. Die Stützelemente (22) können beispielsweise nur über das Flächengebilde miteinander verbunden sein. Vorzugsweise ist jedes Stützelement (22) mit einem benachbarten Stützelement (22) an einzelnen Kontaktpunkten verbunden. Die Verbindung der Stützelemente (22) bewirkt, dass im aufgestellten Zustand eine stabile und sich selbst stützende Konstruktion entsteht. In einer Ausführungsform liegen die Stützelemente (22) an ihren Kreuzungs- oder Kontaktpunkten übereinander und sind derart miteinander verbunden, dass die sich berührenden Oberflächen der horizontalen und vertikalen Stützelemente (22) miteinander verklebt, vernäht, verschweißt oder auf andere Art miteinander verbunden sind.
In einer anderen Ausführungsform sind die Stützelemente (22) an den Kreuzungs- oder Kontaktpunkten so miteinander verbunden, dass die Querschnitte der horizontalen Stützelemente in die Querschnitte der vertikalen Stützelemente hineinragen. Damit kann das mindestens eine Fluid von einem Punkt aus durch die gesamte Konstruktion der Stützelemente (22) strömen. Das ist besonders vorteilhaft, weil lediglich ein Lüfter (50) an die erfindungsgemäße Vorrichtung angeschlossen werden muß. Außerdem ist diese Struktur besonders stabil, da sich eine vorteilhafte Druckverteilung einstellt.
In einer weiteren Ausführungsform sind lediglich einzelne, vertikal aufgestellte Stützelemente vorgesehen, welche über ein horizontales Fluidrohr miteinander verbunden sind. Das Fluidrohr kann im Dachgiebel oder in Bodennähe verlaufen und verteilt das über den Fluideinlaß (51) einströmende Fluid auf alle Stützelemente. Das Fluidrohr ist bevorzugt ein starres Kunststoff- oder Metallrohr, welches dem am Fluideinlaß (51) anliegenden Druck standhalten muß. Es kann aber auch aus flexiblen gasdichten Materialien gefertigt sein.

Letztendlich können die Stützelemente (22) in jeder beliebigen Anordnung zueinander angeordnet sein soweit damit im aufgestellten Zustand ein dreidimensionales Gebilde geschaffen wird.

Die Stützelemente (22) sind mit mindestens einem Fluid wie Flüssigkeiten oder Gasen befüllbar, d.h. sie müssen einen für Gase oder Flüssigkeiten durchströmbaren Querschnitt aufweisen. Eventuelle Verstärkungselemente im Inneren der Stützelemente (22) dürfen deren Durchströmbarkeit nicht wesentlich behindern. Für eine ausreichende Stabilität und Auflagefläche für das Flächengebilde (14) sollte der Querschnitt der Stützelemente (22) einen Durchmesser von mindestens 10cm aufweisen. Vorzugsweise beträgt der Durchmesser 50cm. In einer weiteren bevorzugten Ausführungsform haben die Stützelemente einen Durchmesser von mindestens 80cm, vorzugsweise liegt der Durchmesser zwischen 90cm und 110cm.
Die Stützelemente können beliebige dreidimensionale Gebilde sein, wie z.B. Schläuche oder andere Hohlkörper. Die Stützelemente (22) sind in einer bevorzugten Ausführungsform Schläuche. Die Stützelemente (22) können jede beliebige Querschnittsform haben, wobei ein runder Querschnitt besonders bevorzugt ist. Ein runder Querschnitt ist einfach herzustellen und erlaubt eine optimale Druckverteilung innerhalb der Stützelemente (22). Die Stützelemente können beispielsweise auch einen ovalen Querschnitt aufweisen.
In einer Ausführungsform sind die Stützelemente (22) mit Gas aufblasbare Schläuche. Als Gas wird vorzugsweise Luft verwendet, die einen Überdruck von mindestens 200Pa in den Stützelementen (22) aufweist. Vorzugsweise hat die Luft einen Überdruck von mindestens 10kPa. Neben Luft kann auch Helium oder andere verfügbare Gase zur Anwendung kommen.
In einer weiteren Ausführungsform sind die Stützelemente (22) mit einer Flüssigkeit wie beispielsweise Wasser füllbar.
Die Stützelemente (22) können auch mit einer Flüssigkeit und einem Gas gefüllt sein, wobei dann vorzugsweise die Flüssigkeit in einem unteren Teil der Stützelemente (22) und das Gas in einen oberen Teil der Stützelemente (22) eingebracht wird. Dabei umfaßt der untere Teil den bodennahen Bereich der Stützelemente (22) wie beispielsweise den Wandbereich (26) und der obereTeil umfaßt einen bodenfernen Bereich wie beispielsweise den Dachbereich (24). Das hat den Vorteil, dass die Flüssigkeit gleichzeitig die Vorrichtung am Boden (28) stabilisiert.

Um einen zu hohen Druck in den Stützelemente zu verhindert, ist mindestens ein Überdruckventil (54) vorgesehen. Dieses mindestens eine Überdruckventil (54) öffnet sich beispielsweise bei einem Innendruck von mehr als 25kPa und verhindert somit eine eventuelle Zerstörung der Stützelemente durch Überdruck. Beispielsweise kann ein Überdruckventil des Herstellers Halkey Roberts, St Petersburg, Florida, USA zur Anwendung kommen.

Als Material für die Stützelemente (22) dient ein wasserdichtes und luftdichtes Material, wie beispielsweise ein PVC beschichtetes Trägergewebe. Das Material sollte ausreichend witterungsbeständig und strapazierbar sein, um eine hohe Lebensdauer zu ermöglichen. Vorzugsweise ist das Material flexibel und damit faltbar bzw. drapierbar, damit im abgesenkten Zustand die Stützelemente (22) in sich zusammenfallen können. Das Merkmal der Drapierbarkeit ist für die vorliegende Erfindung wichtig, damit während und nach dem Entleeren der Stützelemente (22) das Zusammenfallen der Vorrichtung kontrollierbar ist, um ein genaues Plazieren des wasserdichten und gasdurchlässigen Flächengebildes (14) auf der Oberfläche der Rottemiete zu erreichen.

Die Stützelemente (22) weisen eine Oberseite (16) und eine Unterseite (18) auf, wobei die Unterseite (18) den Teil der Oberfläche der Stützelemente (22) darstellt, der im aufgestellten Zustand in das Rauminnere weist und die Oberseite (16) den entgegengesetzten Teil der Oberfläche der Stützelemente (22) darstellt, der zur Umgebung weist. Das wasserdichte und gasdurchlässige Flächengebilde (14) der erfindungsgemäßen Vorrichtung (10) ist entweder auf der Oberseite (16) oder auf der Unterseite (18) der Stützelemente (22) angeordnet.
In einer weiteren Ausführungsform ist das Flächengebilde (14) zwischen den Stützelementen (22) angeordnet und zwar so, dass die von den Stützelementen (22) in Umfangsrichtung begrenzten Flächen von dem Flächengebilde (14) ausgefüllt sind.
Vorzugsweise befindet sich das Flächengebilde (14) auf der Unterseite (18) der Stützelemente (22). Das Flächengebilde (14) kann mit jeder bekannten Befestigungsart an den Stützelementen (22) befestigt werden, dazu gehören Befestigungsmöglichkeiten wie Binden, Nähen, Kleben, Verschweißen, mit Druck- oder Magnetknöpfen, mit Klettverschlüssen, mit Haken oder Reißverschluß. Es ist darauf zu achten, dass das Befestigen des wasserdichten Flächengebildes (14) zu keiner Verschlechterung seiner Wasserdichtigkeit führt. Vorzugsweise ist das Flächengebilde (14) lösbar an den Stützelementen (22) befestigt, um ein leichtes und schnelles Wechseln des Flächengebildes (14) bei Verschmutzung oder Beschädigung zu ermöglichen.
In einer Ausführungsform bedeckt das wasserdichte und gasdurchlässige Flächengebilde (14) die gesamte Unterseite der Stützelemente (22).
In einer anderen Ausführungsform bedeckt das Flächengebilde lediglich die Unterseite des Dachbereich (24). Diese besonders kostengünstige Ausführung verwendet zusätzlich eine wasserdichte Schutzschicht (15), die im Wandbereich angebracht ist. Diese wasserdichte Schutzschicht (15) ist in der Regel kostengünstiger als das Flächengebilde (14) und weist ein robustes abrasionsbeständiges Material wie beispielsweise ein PVC beschichtetes Trägergewebe auf Damit wird ein zusätzlicher Schutz der erfindungsgemäßen Vorrichtung gegen Beschädigungen der Seitenwände im gefüllten Zustand durch Maschinen und Fahrzeugen erreicht.

Für eine ausreichende Belüftung der Rottemiete, hat das wasserdichte und gasdurchlässige Flächengebilde (14) eine ausreichende Luftdurchlässigkeit aufzuweisen. Bei einer Rottemiete werden dadurch die aeroben Abbauprozesse der organischen Bestandteile gewährleistet. Vorzugsweise liegt die Luftdurchlässigkeit des Flächengebilde (14) zwischen 3 und 100 m³/m²/h bei einer angelegten Druckdifferenz von 200Pa.
Das Flächengebilde (14) ist flüssigkeitsdicht bei einen Wassereintrittsdruck von größer 10kPa, vorzugsweise größer 50kPa, wobei der Wassereintrittsdruck bis zu einer Höhe von 1MPa gehen kann.
Der Wasserdampfdurchgangswiderstand Ret des Flächengebildes (14) beträgt weniger als 15m²Pa/W, vorzugsweise weniger als 10m²Pa/W.
Das Flächengebilde (14) ist ein gasdurchlässiges und wasserdichtes Textil, eine gasdurchlässige und wasserdichte Membrane oder ein Laminat mit einer gasdurchlässigen und wasserdichten Membrane. Als Textil kann ein dichtverpresstes oder dichtverwebtes Textil, wie beispielsweise ein hochfestes Polyestergewebe, verwendet werden.
Auch das Flächengebilde (14) muß aus einem flexiblen und somit faltbaren und drapierbaren Material sein, damit es im abgesenkten Zustand auf die Oberfläche der Rottemiete (12) plaziert sowie überschüssiges Material an Flächengebilde (14) und Stützelementen (22) um die Rottemiete (12) herum gefaltet werden kann.

Vorzugsweise wird als flüssigkeitsdichtes und gasdurchlässiges Flächengebilde (14) ein Laminat (40) mit einer porösen Schicht (42) und mindestens einer textilen Schicht (44) verwendet. Die Poren der porösen Schicht müssen ausreichend groß sein, um den notwendigen Gasdurchsatz zu ermöglichen. Bei der porösen Schicht handelt es sich beispielsweise um ein Material aus der Gruppe der Polyolefine, Polyester, Polyvinylchloride, Polyvinylidenchloride, Polyurethane oder Fluorpolymere. Vorzugsweise ist die poröse Schicht eine mikroporöse Membrane. Membranen sind dünn, leicht, flexibel und drapierfähig. Zusätzlich sind sie wasserdampfdurchlässig, luftdurchlässig und wasserdicht.

Bevorzugte mikroporöse Membranen beinhalten Fluorpolymere wie beispielsweise Polytetrafluorethylen; Polyolefine wie Polyethylen oder Polypropylen; Polyamide, Polyester; Polysulfone, Polyethersulfone und Kombinationen davon; Polycarbonate; Polyurethane. Vorzugsweise wird eine Membrane aus gerecktem Polytetrafluorethylen (ePTFE) verwendet. Die Membrane aus ePTFE liegt mit einer Dicke zwischen 5-500µm, vorzugsweise zwischen 15-60µm vor.
Dieses Material zeichnet sich durch eine Vielzahl von offenen, miteinander verbundenen Hohlräumen aus, einem großem Hohlraumvolumen und einer großen Stärke. Expandiertes Polytetrafluorethylen (ePTFE) ist weich, flexibel, hat stabile chemische Eigenschaften, eine hohe Durchlässigkeit gegenüber Gasen sowie Dämpfen und eine Oberfläche mit einer guten Abweisung gegen Verunreinigungen.
Weiterhin ist dieses Material durchlässig für Gas. Die Porosität und die Porengröße ist so gewählt, dass die Gasdiffusion nicht behindert wird. Die durchschnittliche Porengröße kann 0,1-100µm betragen, vorzugsweise 0,2 - 10µm, bestimmt nach dem oben beschriebenen Coulter-Test. Die Porosität beträgt 30 - 90%, vorzugsweise 50 - 80%. Gleichzeitig ist das Material wasserdicht. Ein Verfahren zur Herstellung solcher poröser Membranen aus gerecktem PTFE ist beispielsweise in den Patenten US 3,953,566 und US 4,187,390 offenbart.

Vorzugsweise ist die mikroporöse Membrane mit einem textilen Trägermaterial versehen, welches der Membrane einen zusätzlichen Schutz und Festigkeit verleiht. Das Trägermaterial kann mit einer kontinuierlichen oder diskontinuierlichen Klebstoffschicht auf mindestens einer der Oberflächen der Membrane auflaminiert sein. Vorteilhafterweise ist das Trägermaterial ein textiles Flächengebilde aus gewebten, gewirkten oder gestrickten, natürlichen oder synthetischen textilen Materialien. Auch Gelege und Vliese können verwendet werden. Als textile Materialien sind besonders Polyester, Polyamide, Polyethylen, Polyacrylate, Polypropylen, Glasfaser, Fluorpolymer oder ein aus PTFE gewebtes Textil geeignet. Es ist vorgesehen, dass das Trägermaterial nach außen zur Atmosphäre hin angeordnet ist. Alternativ kann auf der anderen Membranoberfläche ein weiteres textiles Flächengebilde angeordnet sein.

In einer weiteren Ausführungsform ist das Flächengebilde (14) oleophobiert. Eine Oleophobierung der Membrane erfolgt derart, dass die Porosität der Membrane nicht deutlich verringert wird. Vorzugsweise hat die Membrane eine Ölrate von > 1, idealerweise ist die Ölrate > 5, so dass das Befeuchten und Verschmutzen mit organischen Substanzen dauerhaft vermieden wird. Das Oleophobieren wird beispielsweise in der DE 43083692 beschrieben. Besonders bevorzugt wird für die vorliegende Erfindung eine oleophobierte ePTFE Membrane. Die oleophobierte mikroporöse Membrane kann mindestens eine textile auflaminierte Trägerschicht aufweisen.
Bei den textilen Trägermaterialien werden vergleichbar hohe Ölraten durch Verwendung kommerziell verfügbarer Fluorkarbon-Beschichtungen erreicht. Gewöhnlich wird ein Oleophobiermittel in flüssiger Form auf das zu oleophobierende Material aufgebracht, wie beispielsweise durch Tauchen, Tränken, Sprühen, Beschichten, Streichen, Walzen.

Ein besonders bevorzugtes Flächengebilde (14) in Form eines 3-Lagen-Laminates ist in Figur 4 dargestellt. Zwischen zwei textilen Trägermaterialien (44) ist eine wasserdichte, wasserdampfdurchlässige Funktionsschicht (42) angeordnet. Die Funktionsschicht enthält eine mikroporöse Membrane, vorzugsweise aus ePTFE.
Die Porengröße der Membrane beträgt 0,1 bis 100µm, vorzugsweise 0,2 bis 10µm. Eine solch geringe Porengröße verhindert, dass Keime und Bio-Aerosole nach außen dringen können. Gleichzeitig ist für einen ausreichenden Gasaustausch mit der Umgebung gesorgt.
Ein solches Laminat wird beispielsweise in der WO 01/21394 A1 beschrieben und ist über die Firma W.L Gore & Associates GmbH, Putzbrunn bei München, unter dem Namen Gore®-Cover erhältlich.

Figur 1 zeigt eine bevorzugte Ausführungsform der Vorrichtung (10) in der vertikale und horizontale Stützelemente (22) kreuzweise zueinander angeordnet und unmittelbar miteinander verbunden sind. Die Stützelemente (22) sind mit Luft aufblasbare Schläuche, so dass im aufgestellten Zustand der Stützelemente (22) diese einen dreidimensionalen Tunnel mit einem halbkreisförmigen Querschnitt bilden. Die vertikal angeordneten Schläuche verlaufen im aufgestellten Zustand halbkreisförmig entlang des Tunnelumfangs und das jeweiligen Schlauchende eines vertikal angeordneten Schlauches ist mit Befestigungsvorrichtungen (32) am Erdboden (28) befestigt.
Die vertikalen Schläuche sind in einem Abstand von beispielsweise mindestens 3m zueinander angeordnet und am Boden befestigt. Jeweils ein vertikaler Schlauch bildet einen Vorderbereich (23) und einen Endbereich (25) der Vorrichtung. Der Vorderbereich (23) weist gleichzeitig eine Öffnung zum Betreten und/oder Befahren des Inneren der Vorrichtung auf. Die Öffnung kann als separates Tor im Flächengebilde vorgesehen sein, welche sich im aufgestellten Zustand aufrichtet und bedient werden kann.
Die Anzahl der vertikalen Schläuche als auch die Größe des Abstand zueinander wird durch die Größe der Vorrichtung bestimmt.
Die horizontalen Schläuche verlaufen quer zu den vertikalen Schläuchen, vorzugsweise verlaufen sie im 90° Winkel zwischen den vertikalen Schläuchen. Die Anordnung der horizontalen Schläuche zwischen den vertikalen Schläuchen ist nicht festgelegt, vorzugsweise jedoch verlaufen die horizontalen Schläuche in einer Reihe vom Vorderbereich (23) bis zum Endbereich (25) der Vorrichtung. In einer Ausführung verläuft eine Reihe horizontaler Schläuche entlang des höchsten Punktes des Tunnels und bildet ein Dachstützelement. Weiterhin bilden jeweils eine Reihe weiterer horizontaler Schläuche eine Abgrenzung zwischen Dachbereich (24) und Wandbereich (26) der Vorrichtung. Auch die Anzahl der horizontalen Schläuche ist von der Größe der erfindungsgemäßen Vorrichtung abhängig.
Die Schläuche haben vorzugsweise einen Durchmesser von 500mm. Aufblasbare Schlauchkonstruktionen sind beispielsweise bei der Fa. HS-Behältertechnik GmbH in Regensburg, Deutschland, oder bei der Firma Montfort Fahnen in Klagenfurt, Österreich erhältlich.

Die Randbereiche der erfindungsgemäßen Vorrichtung sind mit Hilfe von Befestigungsvorrichtungen (32) am Boden (28) befestigt. Unter Randbereiche werden die Bereiche der Vorrichtung verstanden, die auch im aufgestellten Zustand unmittelbar auf dem Boden (28) aufliegen. Das betrifft sowohl die Enden der vertikalen Stützelemente (22) als auch die umlaufenden Ränder des Flächengebildes (14) oder der Schutzschicht (15). Als Befestigungsvorrichtungen (32) können Erdnägel oder Heringe, Schrauben, Nägel, in den Randbereich eingearbeitete oder aufgelegte Beschwerungselemente, mit Wasser zu flutende Schläuche im/am Randbereich oder Vorrichtungen zur Erzeugung von Magnetismus oder andere die Gravitation verstärkende Kräfte verstanden werden. Eine mögliche Variante der Befestigung ist in der DE 198 42 887 A1 beschrieben. Besonders vorteilhaft ist eine Befestigung, die das Innere der Vorrichtung so wasser- und luftdicht abdichtet, so dass keine Leckströme entweichen können. Figur 1c zeigt eine bevorzugte Variante für die Befestigung der Vorrichtung. Die Schlauchenden sind dabei mit Heringen (33) am Erdboden (28) befestigt. Der Randbereich (17) der Vorrichtung (18) ist so umgeschlagen, dass er flach auf dem Erdboden (28) liegt. Beschwerungselemente (32) wie Wasserschläuche, Sandsäcke, Gewichte oder Balken liegen auf dem umgeschlagenen Randbereich (17) und halten damit die Konstruktion (10) fest am Boden (28).

Die Abmessungen der erfindungsgemäßen Vorrichtung sind von dem jeweiligen Verwendungszweck abhängig. Vorzugsweise erhebt sich die gefüllte Vorrichtung über eine Grundfläche von 40 bis 600m². Dabei kann die Vorrichtung eine Höhe von bis zu 6m erreichen. In einer bevorzugten Ausführungsform kann die Vorrichtung eine Höhe von bis zu 8m oder mehr erreichen.

In einer weiteren Ausführungsform ist der Endbereich (25) einer ersten Vorrichtung mit dem Vorderbereich (23) einer zweiten Vorrichtung koppelbar. Das hat den Vorteil, dass mehrere erfindungsgemäße Vorrichtungen aneinander gefügt werden können, um größere Vorrichtungen zu erhalten. Das Zusammenfügen kann beispielsweise über Reißverschlüsse oder Klettverschlüsse erfolgen, wobei dann die Stirnwände (29) zwischen den Vorrichtungen entfallen.

Figur 2 zeigt einen Ausschnitt einer Seitenansicht der Vorrichtung im abgesenkten Zustand. In diesem Zustand sind die Stützelemente (22) leer, das heißt, sie enthalten im wesentlichen kein Fluid. Das Flächengebilde (14) bedeckt im wesentlichen die Oberfläche der Rottemiete (12), dabei liegt das Flächengebilde (14) unmittelbar auf dem abzudeckenden Material auf.
Der abgesenkte Zustand wird durch das selbstständige Entleeren der Stützelemente verwirklicht, indem beispielsweise der Lüfter ausgestellt wird. Sobald der angelegte Druck wegfällt, strömt das Fluid aus den Stützelementen. Dabei sinkt die Konstruktion in sich zusammen. In einer anderen Ausführungsform kann das Entleeren der Stützelemente durch mindestens einen Fluidauslaß (51) erfolgen.
Der Wandbereich (26) der Vorrichtung wird von der Schutzschicht (15) gebildet. Diese wasserdichte Schutzschicht (15) kommt nicht unmittelbar auf der Rottemiete (12) zum Liegen und ist für den Luft- und Gasaustausch zwischen der Rottemiete (12) und der Umgebung ohne Bedeutung. Die Schutzschicht (15) faltet sich während des Zusammensinken der Konstruktion überwiegend selbstständig um die Rottemiete (12) herum zusammen. Das geordnete Zusammenfalten der Schutzschicht (15) erfolgt mit Hilfe von Reffmechanismen oder mit Hilfe von elastischen Materialien, die das Schutzschichtmaterial zusammenziehen, so dass das wasserdichte und gasdurchlässige Flächengebilde (14) auf der Oberfläche der Rottemiete (12) aufliegt. Reffmechanismen können Bänder, Gurte, Zugseile, Flaschenzüge oder Riemen sowie elastische Bänder enthalten. Die Vorrichtung verbleibt in der Regel mehrere Wochen im abgesenkten Zustand bis die aeroben Abbauprozesse der Rottemiete abgeschlossen sind.

In Figur 3 ist der Querschnitt durch die erfindungsgemäße Vorrichtung im abgesenkten Zustand dargestellt. Das wasserdichte und gasdurchlässige Flächengebilde (14) ist auf der Unterseite (18) der Stützelemente (22) befestigt. Im Dachbereich (24) ist das Flächengebilde (14) aus einem dreilagigen porösen Laminat (40) gebildet. Der Wandbereich (26) besteht aus einer wasserdichten Schutzschicht (15). Das Laminat (40) liegt im abgesenkten Zustand unmittelbar auf der Oberfläche der Rottemiete (12) auf und sorgt für einen ausreichenen Gasund Luftaustausch. Die Stützelemente (22) ruhen im Dachbereich (24) flach auf dem Laminat (40) und sind seitlich der Rottemiete (12) mit der Schutzschicht (15) übereinander gefaltet. Das Falten erfolgt so, dass sich beim erneuten Aufstellen der Vorrichtung das Material der Konstruktion einfach und ohne Widerstand entfalten läßt.

Figur 5 zeigt eine weitere Ausführungsform, wo die erfindungsgemäße Vorrichtung auf Einfassungswänden in Form eines U-förmigen Sockels (36) aufgesetzt ist. Der Sockel (36) ist z.B. aus Steinen gemauert oder aus Beton gegossen und ersetzt die Anfahrwände (34) in der Ausführungsform nach Figur 1. Die Höhe des Sockels liegt vorzugsweise zwischen 0,5m - 1,5m. Die Vorrichtung entspricht ansonsten der in den Fig. 1 bis 4 beschriebenen Vorrichtung. In einer weiteren Ausgestaltung können sich die Schlauchenden der Stützelemente in Säcken befinden wobei die Säcke an den Einfassungswänden befestigt sind.

Eine weitere Ausführungsform sieht vor, dass die Abdeckkonstruktion an eine bestehende Halle angesetzt wird. Dazu hat die Halle mindestens eine seitliche Öffnung wie beispielsweise ein luftdichtes Rolltor oder Rolltür. Der Vorderbereich der Vorrichtung ist an der Öffnung luftdicht befestigt. Im aufgestellten Zustand der Vorrichtung wird lediglich die Öffnung zur Halle geöffnet, um Material in die Vorrichtung einzubringen oder auszutragen. Der Vorteil dieser Ausführungsform ist, dass ein Kontakt zur Umgebung weitgehend unterbunden ist, da bei Öffnen der Vorrichtung, keim- und sporenbelastete Luft in die Halle dringt und dort gezielt abgesaugt werden kann.

## Patentansprüche

1. Abdeckkonstruktion (10) für geschüttete und gestapelte Materialien (12) mit einer Abdeckplane, die Abdeckplane weist
a) eine Anzahl von mit mindestens einem Fluid füllbaren und mindestens teilweise miteinander verbundenen Stützelementen (22) sowie
b) mindestens ein wasserdichtes und gasdurchlässiges Flächengebilde (14) auf, wobei das Flächengebilde (14) mit den Stützelementen (22) verbunden ist.

2. Abdeckkonstruktion (10) nach Anspruch 1,
wobei das wasserdichte und gasdurchlässige Flächengebilde (14) ein Laminat (40) mit einer porösen Schicht (42) aufweist und die poröse Schicht (42) mit mindestens einer textilen Schicht (44) verbunden ist.

3. Abdeckkonstruktion (10) nach Anspruch 2,
wobei die poröse Schicht (42) eine mikroporöse Membrane aufweist.

4. Abdeckkonstruktion (10) nach Anspruch 2,
wobei die poröse Schicht (42) aus der Gruppe der Polyolefine, Polyester, Polyvinylchloride, Polyvinylidenchloride, Polyurethane oder Fluorpolymere ausgewählt ist.

5. Abdeckkonstruktion (10) nach Anspruch 2 bis 4,
wobei die poröse Schicht (42) gerecktes Polytetrafluorethylen (ePTFE) aufweist.

6. Abdeckkonstruktion (10) nach Anspruch 2,
wobei die textile Schicht (44) Polyester, Polyamide, Polyethylen, Polyacrylat, Polypropylen, Glasfaser oder Fluorpolymer aufweist.

7. Abdeckkonstruktion (10) nach Anspruch 1,
wobei das wasserdichte und gasdurchlässige Flächengebilde (14) eine Luftdurchlässigkeit zwischen 3 und 100 m³/m²/h bei 200Pa Druckdifferenz aufweist.

8. Abdeckkonstruktion (10) nach Anspruch 1,
wobei das wasserdichte und gasdurchlässige Flächengebilde (14) einen Wassereintrittsdruck von größer als 10kPa aufweist.

9. Abdeckkonstruktion (10) nach Anspruch 1,
wobei das wasserdichte und gasdurchlässige Flächengebilde (14) einen Wasserdampfdurchgangswiderstand Ret von weniger als 20m²Pa/W aufweist.

10. Abdeckkonstruktion (10) nach Anspruch 1,
wobei die Stützelemente (22) aufblasbare Schläuche sind.

11. Abdeckkonstruktion (10) nach Anspruch 10, wobei die Schläuche einen Durchmesser von > 80cm aufweisen.

12. Abdeckkonstruktion (10) nach Anspruch 10, wobei die Schläuche einen Druck von mindestens 1 0kPa standhalten.

13. Abdeckkonstruktion (10) nach Anspruch 1, wobei das mindestens eine Fluid ein Gas, ein Dampf, eine Flüssigkeit ist.

14. Abdeckkonstruktion (10) nach Anspruch 13, wobei das Gas Luft ist.

15. Abdeckkonstruktion (10) nach Anspruch 1, wobei das Fluid einen Druck von mindestens 200Pa aufweist.

16. Abdeckkonstruktion (10) nach Anspruch 1,
einen Dachbereich (24) und einen Wandbereich (26) aufweisend,
wobei das wasserdichte und gasdurchlässige Flächengebilde (14) mindestens im Dachbereich (24) angeordnet ist.

17. Abdeckkonstruktion (10) nach Anspruch 16,
wobei eine wasserdichte Schutzschicht (15) mit den Stützelementen (22) im Wandbereich (26) verbunden ist.

18. Abdeckkonstruktion (10) nach Anspruch 1,
wobei die Stützelemente (22) und das Flächengebilde (14) ein flexibles Material aufweisen.

19. Abdeckkonstruktion (10) für geschüttete und gestapelte Materialien (12), die Abdeckkonstruktion (10) weist eine Abdeckplane auf, wobei die Abdeckplane gebildet ist durch
a) eine Anzahl von mit Luft aufblasbaren und miteinander verbundenen Schläuchen (22) sowie
b) ein wasserdichtes und gasdurchlässiges Flächengebilde (14) ein mikroporöse Membrane aus gerecktem Polytetrafluorethylen aufweisend wobei das Flächengebilde (14) mit den Schläuchen (22) verbunden ist.

20. Verwendung der Abdeckkonstruktion (10) nach Anspruch 1 als Mietenabdeckung für eine Rottemiete (12).

21. Vorrichtung zur aeroben Behandlung von geschüttetem oder gestapeltem Material (12) eine Abdeckkonstruktion (10) aufweisend, welche das geschüttete oder gestapelte Material (12) abdeckt,
die Abdeckkonstruktion weist eine Abdeckplane auf, die Abdeckplane umfaßt eine Anzahl von mit mindestens einem Fluid füllbaren und mindestens teilweise miteinander verbundenen Stützelementen (22) und mindestens ein wasserdichtes und gasdurchlässiges Flächengebilde (14), welches mit den Stützelementen (22) verbunden ist,
die Vorrichtung weist einen aufgestellten Zustand und einen abgesenkten Zustand auf,
wobei im aufgestellten Zustand die Stützelemente (22) mit mindestens einem Fluid unter Druck so gefüllt sind, dass das Flächengebilde (14) angehoben ist und einen Abstand zum Material bildet,
und im abgesenkten Zustand die Stützelemente (22) von mindestens einem Fluid so entleert sind, dass das Flächengebilde (14) abgesenkt ist und das Material (12) bedeckt.

22. Vorrichtung nach Anspruch 21, wobei der Abstand zwischen gehobenem Flächengebilde (14) und Material (12) mindestens 2m beträgt.

23. Vorrichtung nach Anspruch 21, wobei das gehobene Flächengebilde (14) einen befahrbaren Raum (30) um das Material (12) bildet.

24. Vorrichtung nach Anspruch 23, wobei der Raum (30) eine Höhe von mindestens 6m aufweist.

25. Vorrichtung nach Anspruch 21, wobei die Vorrichtung mindestens eine verschließbare Öffnung aufweist.

26. Vorrichtung nach Anspruch 21 mindestens eine Einfassungswand (36) aufweisend welche das Material (12) umgibt, wobei die Abdeckkonstruktion (10) an der mindestens einen Einfassungswand (36) befestigt ist.

27. Vorrichtung nach Anspruch 21,
wobei das wasserdichte und gasdurchlässige Flächengebilde (14) ein Laminat (40) ist, welches eine poröse Schicht (42) verbunden mit mindestens einer textilen Schicht (44a, 44b) aufweist.

28. Vorrichtung nach Anspruch 27,
wobei die poröse Schicht (42) eine mikroporöse Membrane aufweist.

29. Vorrichtung nach Anspruch 27,
wobei die poröse Schicht (42) aus der Gruppe der Polyolefine, Polyester, Polyvinylchloride, Polyvinylidenchloride, Polyurethane oder Fluorpolymere ausgewählt ist.

30. Vorrichtung nach Anspruch 27 bis 29,
wobei die poröse Schicht (42) gerecktes Polytetrafluorethylen (ePTFE) aufweist.

31. Vorrichtung nach Anspruch 27,
wobei die textile Schicht (44a, 44b) Polyester , Polyacrylat, Polypropylen, Polyamide, Polyethylen, Glasfaser oder Fluorpolymer aufweist.

32. vorrichtung nach Anspruch 21,
wobei das wasserdichte und gasdurchlässige Flächengebilde (14) eine Gasdurchlässigkeit zwischen 3 und 100 m³/m²/h bei 200Pa Druckdifferenz aufweist.

33. Vorrichtung nach Anspruch 21,
wobei das wasserdichte und gasdurchlässige Flächengebilde (14) einen Flüssigkeitseintrittsdruck von größer als 10kPa aufweist.

34. Vorrichtung nach Anspruch 21,
wobei das wasserdichte und gasdurchlässige Flächengebilde (14) einen Wasserdampfdurchgangswiderstand Ret von weniger als 20m²Pa/W aufweist.

35. Vorrichtung nach Anspruch 21, wobei die Stützelemente (22) aufblasbare Schläuche sind.

36. Vorrichtung nach Anspruch 35, wobei die Schläuche einen Durchmesser von > 80cm aufweisen.

37. Vorrichtung nach Anspruch 35, wobei die Schläuche einen Druck von mindestens 10kPa standhalten.

38. Vorrichtung nach Anspruch 21, wobei das mindestens eine Fluid ein Gas, ein Dampf, eine Flüssigkeit ist.

39. Vorrichtung nach Anspruch 38, wobei das Gas Luft ist.

40. Vorrichtung nach Anspruch 21, wobei das mindestens eine Fluid einen Druck von mindestens 200Pa aufweist.

41. Vorrichtung nach Anspruch 21, eine Dachbereich (24) und einen Wandbereich (26) aufweisend, wobei das wasserdichte und gasdurchlässige Flächengebilde (14) mindestens im Dachbereich (24) angeordnet ist.

42. Vorrichtung nach Anspruch 41, wobei eine wasserdichte Schutzschicht (14) mit den Stützelementen (22) im Wandbereich (26) verbunden ist.

43. Verfahren zur Handhabung einer Vorrichtung zur aeroben Behandlung von geschüttetem oder gestapeltem Material (12) mit den Schritten:
a) Bereitstellen einer Abdeckkonstruktion (10) mit einer Abdeckplane welche eine Anzahl von mit mindestens einem Fluid füllbaren und mindestens teilweise miteinander verbundenen Stützelementen (22) und mindestens ein wasserdichtes und gasdurchlässiges Flächengebilde (14) aufweist, welches mit den Stützelementen (22) verbunden ist,
b) Aufstellen der Abdeckkonstruktion (10) durch Befüllen der Stützelemente (22) mit mindestens einem Fluid bei einem Druck, dass das Flächengebilde (14) angehoben wird und ein Raum (30) ausbildet wird,
c) Einbringen des Materials (12) in den Raum (30),
d) Absenken der Abdeckkonstruktion (10) durch Ablassen des mindestens einen Fluid aus den Stützelementen (22), wobei das Flächengebilde (14) abgesenkt wird und das Material (12) mit dem Flächengebilde (14) bedeckt wird.

44. Verfahren nach Anspruch 43,
wobei nach Abschluß der aeroben Behandlung Schritt b) wiederholt wird, um das Material (12) aus dem Raum (30) zu entfernen.

## Claims

1. Covering construction (10) for heaped and stacked materials (12) having a cover, the cover comprises
a) a number of support elements (22) which can be filled with at least one fluid and are connected at least in part to one another and also
b) at least one watertight and gas-permeable sheet (14), the sheet (14) being connected to the support elements (22).

2. Covering construction (10) according to Claim 1, wherein the watertight and gas-permeable sheet (14) comprises a laminate (40) with a porous layer (42) and the porous layer (42) is joined to at least one textile layer (44).

3. Covering construction (10) according to Claim 2,
wherein the porous layer (42) comprises a microporous membrane.

4. Covering construction (10) according to Claim 2, wherein the porous layer (42) is selected from the group consisting of polyolefins, polyesters, poly(vinyl chloride)s, poly(vinylidene chloride)s, polyurethanes or fluoropolymers.

5. Covering construction (10) according to Claims 2 to 4, wherein the porous layer (42) comprises stretched polytetrafluoroethylene (ePTFE).

6. Covering construction (10) according to Claim 2, wherein the textile layer (44) comprises polyester, polyamides, polyethylene, polyacrylate, polypropylene, glass fiber or fluoropolymer.

7. Covering construction (10) according to Claim 1, wherein the watertight and gas-permeable sheet (14) has an air permeability between 3 and 100 m³/m²/h at a pressure difference of 200 Pa.

8. Covering construction (10) according to Claim 1, wherein the watertight and gas-permeable sheet (14) has a water ingress pressure of greater than 10 kPa.

9. Covering construction (10) according to Claim 1, wherein the watertight and gas-permeable sheet (14) has a resistance to water vapor permeation Ret of less than 20 m²Pa/W.

10. Covering construction (10) according to Claim 1, wherein the support elements (22) are inflatable flexible tubes.

11. Covering construction (10) according to Claim 10, wherein the flexible tubes have a diameter of > 80 cm.

12. Covering construction (10) according to Claim 10, wherein the flexible tubes withstand a pressure of at least 10 kPa.

13. Covering construction (10) according to Claim 1, wherein the at least one fluid is a gas, a vapor, a liquid.

14. Covering construction (10) according to Claim 13, wherein the gas is air.

15. Covering construction (10) according to Claim 1, wherein the fluid has a pressure of at least 200 Pa.

16. Covering construction (10) according to Claim 1 having a roof area (24) and a wall area (26), wherein the watertight and gas-permeable sheet (14) is arranged at least in the roof area (24).

17. Covering construction (10) according to Claim 16, wherein a watertight protective layer (15) is joined to the support elements (22) in the wall area (26).

18. Covering construction (10) according to Claim 1, wherein the support elements (22) and the sheet (14) have a flexible material.

19. Covering construction (10) for heaped and stacked materials (12), the covering construction (10) having a cover, wherein the cover is formed by
a) a number of flexible tubes (22) which are inflatable and connected to one another and also
b) a watertight and gas-permeable sheet (14) having a microporous membrane of stretched polytetrafluoroethylene, the sheet (14) being joined to the flexible tubes (22).

20. Use of the covering construction (10) according to Claim 1 as heap covering for a compost heap (12).

21. Apparatus for the aerobic treatment of heaped or stacked material (12) having a covering construction (10) which covers the heaped or stacked material (12),
the covering construction has a cover, the cover comprises a number of support elements (22) which can be filled with at least one fluid and are connected to one another at least in part, and at least one watertight and gas-permeable sheet (14) which is connected to the support elements (22), the apparatus has an erected state and a lowered state,
wherein in the erected state the support elements (22) are filled with at least one fluid under pressure in such a manner that the sheet (14) is raised and forms a space from the material,
and in the lowered state the support elements (22) are emptied of at least one fluid so that the sheet (14) is lowered and covers the material (12).

22. Apparatus according to Claim 21, wherein the space between raised sheet (14) and material (12) is at least 2 m.

23. Apparatus according to Claim 21, wherein the raised sheet (14) forms a vehicle-accessible space (30) around the material (12).

24. Apparatus according to Claim 23, wherein the space (30) has a height of at least 6 m.

25. Apparatus according to Claim 21, wherein the apparatus has at least one closable opening.

26. Apparatus according to Claim 21 having at least one enclosure wall (36) which surrounds the material (12), wherein the covering construction (10) is fastened to the at least one enclosing wall (36).

27. Apparatus according to Claim 21, wherein the watertight and gas-permeable sheet (14) is a laminate (40) which has a porous layer (42) joined to at least one textile layer (44a, 44b).

28. Apparatus according to Claim 27, wherein the porous layer (42) comprises a microporous membrane.

29. Apparatus according to Claim 27, wherein the porous layer (42) is selected from the group consisting of polyolefins, polyesters, poly(vinyl chloride)s, poly(vinylidene chloride)s, polyurethanes and fluoropolymers.

30. Apparatus according to Claims 27 to 29, wherein the porous layer (42) comprises stretched polytetrafluoroethylene (ePTFE).

31. Apparatus according to Claim 27, wherein the textile layer (44a, 44b) comprises polyester, polyacrylate, polypropylene, polyamides, polyethylene, glass fiber or fluoropolymer.

32. Apparatus according to Claim 21, wherein the watertight and gas-permeable sheet (14) has a gas permeability between 3 and 100 m³/m²/h at 200 Pa pressure difference.

33. Apparatus according to Claim 21, wherein the watertight and gas-permeable sheet (14) has a liquid ingress pressure of greater than 10 kPa.

34. Apparatus according to Claim 21, wherein the watertight and gas-permeable sheet (14) has a resistance to water vapor permeation Ret of less than 20 m²Pa/W.

35. Apparatus according to Claim 21, wherein the support elements (22) are inflatable flexible tubes.

36. Apparatus according to Claim 35, wherein the flexible tubes have a diameter of > 80 cm.

37. Apparatus according to Claim 35, wherein the flexible tubes withstand a pressure of at least 10 kPa.

38. Apparatus according to Claim 21, wherein the at least one fluid is a gas, a vapor, a liquid.

39. Apparatus according to Claim 38, wherein the gas is air.

40. Apparatus according to Claim 21, wherein the at least one fluid has a pressure of at least 200 Pa.

41. Apparatus according to Claim 21 having a roof area (24) and a wall area (26), wherein the watertight and gas-permeable sheet (14) is arranged at least in the roof area (24).

42. Apparatus according to Claim 41, wherein a watertight protective layer (14) is connected to the support elements (22) in the wall area (26).

43. Process for handling an apparatus for the aerobic treatment of heaped or stacked material (12) having the steps:
a) providing a covering construction (10) having a cover which has a number of support elements (22) which can be filled with at least one fluid and are connected to one another at least in part, and at least one watertight and gas-permeable sheet (14), which is connected to the support elements (22),
b) erecting the covering construction (10) by filling the support elements (22) with at least one fluid at a pressure which raises the sheet (14) and forms a space (30),
c) introducing the material (12) into the space (30),
d) lowering the covering construction (10) by emptying of the at least one fluid from the support elements (22), wherein the sheet (14) is lowered and covers the material (12) with the sheet (14).

44. Process according to Claim 43, wherein after completion of the aerobic treatment, step b) is repeated to remove the material (12) from the space (30).

## Revendications

1. Structure de couverture (10) pour des matériaux (12) en vrac ou empilés, dotée d'au moins un panneau de couverture, le panneau de couverture comprenant :
a) plusieurs éléments de soutien (22) qui peuvent être remplis d'au moins un fluide et qui sont reliés au moins partiellement les uns aux autres ainsi que
b) au moins un produit plat (14) étanche à l'eau et perméable aux gaz, le produit plat (14) étant relié aux éléments de soutien (22).

2. Structure de couverture (10) selon la revendication 1, dans laquelle le produit plat (14) étanche à l'eau et perméable aux gaz présente un stratifié (40) doté d'une couche poreuse (42), la couche poreuse (42) étant reliée à au moins une couche textile (44).

3. Structure de couverture (10) selon la revendication 2, dans laquelle la couche poreuse (42) présente une membrane microporeuse.

4. Structure de couverture (10) selon la revendication 2, dans laquelle la couche poreuse (42) est sélectionnée dans l'ensemble constitué des polyoléfines, des polyesters, des poly(chlorures de vinyle), des poly(chlorures de vinylidène), des polyuréthanes et des polymères fluorés.

5. Structure de couverture (10) selon les revendications 2 à 4, dans laquelle la couche poreuse (42) présente un polytétrafluoroéthylène étiré (ePTFE).

6. Structure de couverture (10) selon la revendication 2, dans laquelle la couche textile (44) présente un polyester, un polyamide, un polyéthylène, un polyacrylate, un polypropylène, des fibres de verre ou un polymère fluoré.

7. Structure de couverture (10) selon la revendication 1, dans laquelle la perméabilité à l'air du produit plat (14) étanche à l'eau et perméable aux gaz est comprise entre 3 et 100 m³/m²/h sous une différence de pression de 200 Pa.

8. Structure de couverture (10) selon la revendication 1, dans laquelle la pression de pénétration par l'eau du produit plat (14) étanche à l'eau et perméable aux gaz est supérieure à 10 kPa.

9. Structure de couverture (10) selon la revendication 1, dans laquelle la résistance à la traversée de vapeur d'eau Ret du produit plat (14) étanche à l'eau et perméable aux gaz est inférieure à 20 m².Pa/W.

10. Structure de couverture (10) selon la revendication 1, dans laquelle les éléments de soutien (22) sont des manchons flexibles gonflables.

11. Structure de couverture (10) selon la revendication 10, dans laquelle les manchons flexibles ont un diamètre > 80 cm.

12. Structure de couverture (10) selon la revendication 10, dans laquelle les manchons flexibles résistent à une pression d'au moins 10 kPa.

13. Structure de couverture (10) selon la revendication 1, dans laquelle le ou les fluides sont constitués d'un gaz, d'une vapeur ou d'un liquide.

14. Structure de couverture (10) selon la revendication 13, dans laquelle le gaz est l'air.

15. Structure de couverture (10) selon la revendication 1, dans laquelle le fluide présente une pression d'au moins 200 Pa.

16. Structure de couverture (10) selon la revendication 1, qui présente une partie (24) formant toit et une partie (26) formant paroi, le produit plat (14) imperméable à l'eau et perméable aux gaz étant disposé au moins dans la partie (24) formant toit.

17. Structure de couverture (10) selon la revendication 16, dans laquelle une couche de protection (15) étanche à l'eau est reliée aux éléments de soutien (22) dans la partie (26) formant paroi.

18. Structure de couverture (10) selon la revendication 1, dans laquelle les éléments de soutien (22) et le produit plat (14) présentent un matériau souple.

19. Structure de couverture (10) pour des matériaux (12) en vrac ou empilés, la structure de couverture (10) présentant un panneau de couverture, le panneau de couverture étant formé par :
a) plusieurs manchons flexibles (22) aptes à être remplis d'air et reliés les uns aux autres et
b) un produit plat (14) étanche à l'eau et perméable aux gaz, qui présente une membrane microporeuse en polytétrafluoroéthylène étiré, le produit plat (14) étant relié aux manchons flexibles (22).

20. Utilisation de la structure de couverture (10) selon la revendication 1 comme couverture de silo pour ensilage de rouissage (12).

21. Dispositif de traitement aérobie d'un matériau (12) en vrac ou empilé, qui présente une structure de couverture (10) qui couvre le matériau (12) en vrac ou empilé,
la structure de couverture présentant un panneau de couverture, le panneau de couverture comprenant plusieurs éléments de soutien (22) aptes à être remplis d'au moins un fluide et reliés au moins en partie les uns avec les autres, et au moins un produit plat (14) étanche à l'eau, perméable aux gaz et relié aux éléments de soutien (22),
le dispositif présentant un état déployé et un état abaissé, et à l'état déployé, les éléments de soutien (22) étant remplis d'au moins un fluide sous pression de telle sorte que le produit plat (14) est relevé et est placé à distance du matériau,
tandis qu'à l'état abaissé, les éléments de soutien (22) sont vidés d'au moins un fluide de telle sorte que le produit plat (14) soit abaissé et couvre le matériau (12).

22. Dispositif selon la revendication 21, dans lequel la distance entre le produit plat (14) relevé et le matériau (12) est d'au moins 2 m.

23. Dispositif selon la revendication 21, dans lequel le produit plat (14) relevé forme un espace (30) praticable autour du matériau (12).

24. Dispositif selon la revendication 23, dans lequel l'espace (30) présente une hauteur d'au moins 6 m.

25. Dispositif selon la revendication 21, dans lequel le dispositif présente au moins une ouverture refermable.

26. Dispositif selon la revendication 21, qui présente au moins une paroi de clôture (36) qui entoure le matériau (12), la structure de couverture (10) étant fixée à la ou aux parois de clôture (36).

27. Dispositif selon la revendication 21, dans lequel le produit plat (14) étanche à l'eau et perméable aux gaz est un stratifié (40) qui présente une couche poreuse (42) reliée à au moins une couche textile (44a, 44b).

28. Dispositif selon la revendication 27, dans lequel la couche poreuse (42) présente une membrane microporeuse.

29. Dispositif selon la revendication 27, dans lequel la couche poreuse (42) est sélectionnée dans l'ensemble constitué des polyoléfines, des polyesters, des poly(chlorures de vinyle), des poly(chlorures de vinylidène), des polyuréthanes et des polymères fluorés.

30. Dispositif selon les revendications 27 à 29, dans lequel la couche poreuse (42) présente un polytétrafluoroéthylène étiré (ePTFE).

31. Dispositif selon la revendication 27, dans lequel la couche textile (44a, 44b) présente un polyester, un polyacrylate, un polypropylène, un polyamide, un polyéthylène, des fibres de verre ou un polymère fluoré.

32. Dispositif selon la revendication 21, dans lequel la perméabilité aux gaz du produit plat (14) étanche à l'eau et perméable aux gaz est comprise entre 3 et 100 m³/m²/h sous une différence de pression de 200 Pa.

33. Dispositif selon la revendication 21, dans lequel la pression de pénétration de liquide du produit plat (14) étanche à l'eau et perméable aux gaz est supérieure à 10 kPa.

34. Dispositif selon la revendication 21, dans lequel la résistance à la traversée de vapeur d'eau Ret du produit plat (14) étanche à l'eau et perméable aux gaz est inférieure à 20 m².Pa/W.

35. Dispositif selon la revendication 21, dans lequel les éléments de soutien (22) sont des manchons flexibles et gonflables.

36. Dispositif selon la revendication 35, dans lequel les manchons flexibles ont un diamètre > 80 cm.

37. Dispositif selon la revendication 35, dans lequel les manchons flexibles résistent à une pression d'au moins 10 kPa.

38. Dispositif selon la revendication 21, dans lequel le ou les fluides sont un gaz, une vapeur ou un liquide.

39. Dispositif selon la revendication 38, dans lequel le gaz est l'air.

40. Dispositif selon la revendication 21, dans lequel le ou les fluides présentent une pression d'au moins 200 Pa.

41. Dispositif selon la revendication 21, qui présente une partie (24) formant toit et une partie (26) formant paroi, le produit plat (14) étanche à l'eau et perméable aux gaz étant disposé au moins dans la partie (24) formant toit.

42. Dispositif selon la revendication 41, dans lequel une couche de protection (14) étanche à l'eau est reliée aux éléments de soutien (22) dans la partie (26) formant paroi.

43. Procédé de manutention d'un dispositif de traitement aérobie d'un matériau (12) en vrac ou empilé, lequel dispositif présente les étapes qui consistent à :
a) préparer une structure de couverture (10) qui présente un panneau de couverture qui comporte plusieurs éléments de soutien (22) aptes à être remplis d'au moins un fluide et reliés au moins en partie les uns aux autres, et au moins un produit plat (14) étanche à l'eau et perméable aux gaz qui est relié aux éléments de soutien (22),
b) déploiement de la structure de couverture (10) en remplissant les éléments de soutien (22) d'au moins un fluide à une pression telle que le produit plat (14) soit relevé et qu'un espace (30) soit formé,
c) introduction des matériaux (12) dans l'espace (30),
d) abaissement de la structure de couverture (10) par évacuation du ou des fluides hors des éléments de soutien (22), le produit plat (14) étant abaissé et le matériau (12) étant recouvert par le produit plat (14).

44. Procédé selon la revendication 43, dans lequel, lorsque le traitement aérobie est terminé, on répète l'étape b) pour retirer le matériau (12) de l'espace (30).
